# EUROPÄISCHE PATENTSCHRIFT

(11) **EP 3 092 266 B1**
(45) Veröffentlichungstag und Bekanntmachung des Hinweises auf die Patenterteilung: **04.07.2018**
(21) Anmeldenummer: 15700965.5
(22) Anmeldetag: 08.01.2015
(51) Int. Cl.: C08J 3/18, C08K 5/00

(54) **WEICHMACHER-ZUSAMMENSETZUNG, DIE FURANDERIVATE UND 1,2-CYCLOHEXANDICARBONSÄUREESTER ENTHÄLT**
PLASTICIZER COMPOSITION CONTAINING FURAN DERIVATIVES AND 1,2-CYCLOHEXANEDICARBOXYLIC ESTER
COMPOSITION PLASTIFIANTE CONTENANT DES DÉRIVÉS DE FURANNE ET DES ESTERS DE L'ACIDE 1,2-CYCLOHEXANEDICARBOXYLIQUE

(30) Priorität: 09.01.2014 EP 14150617
(43) Veröffentlichungstag der Anmeldung: 16.11.2016
(73) Patentinhaber: BASF SE, 67056 Ludwigshafen am Rhein (DE)
(72) Erfinder: WAGNER, Jochen, 66957 Ruppertsweiler (DE); BREITSCHEIDEL, Boris, 67165 Waldsee (DE); BOHN, Martin Alexander, 68161 Mannheim (DE); BLANK, Benoit, 68535 Edingen-Neckarhausen (DE); KINDLER, Alois, 67269 Grünstadt (DE)
(74) Vertreter: BASF IP Association
(86) Internationale Anmeldenummer: PCT/EP2015/050207
(87) Internationale Veröffentlichungsnummer: WO 2015/104309

(56) Entgegenhaltungen:
- DE-A1-102011 004 676
- SANDERSON R D ET AL: "SYNTHESIS AND EVALUATION OF DIALKYL FURAN-2,5-DICARBOXYLATES AS PLASTICIZERS FOR PVC", JOURNAL OF APPLIED POLYMER SCIENCE, WILEY, US, Bd. 53, Nr. 13, 26. September 1994 (1994-09-26), Seiten 1785-1793, XP000464476, ISSN: 0021-8995, DOI: 10.1002/APP.1994.070531308 in der Anmeldung erwähnt

## Beschreibung

### HINTERGRUND DER ERFINDUNG

Die vorliegende Erfindung betrifft eine Weichmacher-Zusammensetzung, die wenigstens ein Furanderivat und wenigstens einen 1,2-Cyclohexandicarbonsäureester enthält, Formmassen, die ein thermoplastisches Polymer oder ein Elastomer und eine solche Weichmacher-Zusammensetzung enthalten und die Verwendung dieser Weichmacher-Zusammensetzungen und Formmassen.

### STAND DER TECHNIK

Zur Erzielung gewünschter Verarbeitungs- bzw. Anwendungseigenschaften werden einer Vielzahl von Kunststoffen so genannte Weichmacher zugesetzt, um diese weicher, flexibler und/oder dehnbarer zu machen. Im Allgemeinen dient der Einsatz von Weichmachern dazu, den thermoplastischen Bereich von Kunststoffen zu niedrigeren Temperaturen hin zu verschieben, um im Bereich niedriger Verarbeitungs- und Einsatztemperaturen die gewünschten elastischen Eigenschaften zu erhalten.

Polyvinylchlorid (PVC) gehört zu den mengenmäßig meist hergestellten Kunststoffen. Aufgrund seiner vielseitigen Anwendbarkeit findet es sich heutzutage in einer Vielzahl von Produkten des täglichen Lebens. PVC wird daher eine sehr große wirtschaftliche Bedeutung zugemessen. PVC ist ursprünglich ein bis ca. 80 °C harter und spröder Kunststoff, der durch Zugabe von Thermostabilisatoren und anderen Zuschlagstoffen als Hart-PVC (PVC-U) eingesetzt wird. Erst durch die Zugabe geeigneter Weichmacher gelangt man zu Weich-PVC (PVC-P), das für viele Anwendungszwecke verwendet werden kann, für die Hart-PVC ungeeignet ist.

Weitere wichtige thermoplastische Polymere in denen üblicherweise Weichmacher Anwendung finden sind z. B. Polyvinylbutyral (PVB), Homo- und Copolymere von Styrol, Polyacrylate, Polysulfide oder thermoplastische Polyurethane (PU).

Ob sich eine Substanz zur Anwendung als Weichmacher für ein bestimmtes Polymer eignet, hängt weitgehend von den Eigenschaften des weichzumachenden Polymers ab. Erwünscht sind in der Regel Weichmacher, die eine hohe Verträglichkeit mit dem weichzumachenden Polymer aufweisen, d. h. diesem gute thermoplastische Eigenschaften verleihen und nur eine geringe Neigung zum Abdampfen und/oder Ausschwitzen (hohe Permanenz) besitzen.

Auf dem Markt ist eine Vielzahl verschiedener Verbindungen zur Weichmachung von PVC und weiteren Kunststoffen erhältlich. Aufgrund ihrer guten Verträglichkeit mit dem PVC und ihrer vorteilhaften anwendungstechnischen Eigenschaften wurden in der Vergangenheit vielfach Phthalsäurediester mit Alkoholen unterschiedlicher chemischer Struktur als Weichmacher eingesetzt, wie z. B. Diethylhexylphthalat (DEHP), Diisononylphthalat (DINP) und Diisodecylphthalat (DIDP). Kurzkettige Phthalate, wie beispielsweise Dibutylphthalat (DBP), Diisobutylphthalat (DIBP), Benzylbutylphthalat (BBP) oder Diisoheptylphthalat (DIHP), werden auch als Schnellgelierer ("fast fuser") eingesetzt, z. B. bei der Herstellung von so genannten Plastisolen. Neben den kurzkettigen Phthalaten können auch Dibenzoesäureester wie Dipropylenglycoldibenzoate zum gleichen Zwecke eingesetzt werden. Eine weitere Klasse von Weichmachern mit guten Geliereigenschaften, sind beispielsweise die Phenyl- und Cresylester von Alkylsulfonsäuren, die unter dem Markennamen Mesamoll® erhältlich sind.

Bei Plastisolen handelt es sich zunächst um eine Suspension von feinpulvrigen Kunststoffen in flüssigen Weichmachern. Dabei ist die Lösungsgeschwindigkeit des Polymers in dem Weichmacher bei Umgebungstemperatur sehr gering. Erst beim Erwärmen auf höhere Temperaturen löst sich das Polymer merklich im Weichmacher. Dabei quellen und fusionieren die einzelnen isolierten Kunststoffaggregate zu einem dreidimensionalen hochviskosen Gel. Dieser Vorgang wird als Gelieren bezeichnet und findet ab einer gewissen Mindesttemperatur statt, die als Gelier- oder Lösetemperatur bezeichnet wird. Der Schritt der Gelierung ist nicht reversibel.

Da Plastisole in flüssiger Form vorliegen, werden diese sehr häufig zum Beschichten von verschiedensten Materialien, wie z. B. Textilien, Glasvliesen etc., eingesetzt. Dabei wird die Beschichtung sehr häufig aus mehreren Lagen aufgebaut.

In der Praxis wird bei der Verarbeitung von Plastisolprodukten deshalb oftmals so vorgegangen, dass eine Schicht Plastisol aufgebracht wird und direkt im Anschluss der Kunststoff, insbesondere PVC, mit dem Weichmacher oberhalb der Lösetemperatur angeliert wird, also eine feste Schicht, bestehend aus einer Mischung aus gelierten, teilweise gelierten und nicht-gelierten Kunststoffpartikeln entsteht. Auf diese angelierte Schicht wird dann die nächste Lage aufgebracht und nach Aufbringen der letzten Schicht der Gesamtaufbau durch Erwärmen auf höhere Temperaturen komplett zum vollständig gelierten Kunststoffprodukt verarbeitet.

Neben Plastisolen können auch trockene pulverförmige Mischungen aus Weichmacher und Kunststoffen hergestellt werden. Solche Dry-Blends, insbesondere auf Basis PVC, können dann bei erhöhten Temperaturen, z. B. durch Extrusion, zu einem Granulat weiterverarbeitet oder durch herkömmliche Formgebungsverfahren, wie Spritzgießen, Extrudieren oder Kalandrieren, zum vollständig gelierten Kunststoffprodukt verarbeitet werden.

Aufgrund steigender technischer und wirtschaftlicher Anforderungen an die Verarbeitung thermoplastischer Polymere und Elastomere, sind zudem Weichmacher erwünscht, die gute Geliereigenschaften besitzen.

Insbesondere bei der Herstellung und Verarbeitung von PVC-Plastisolen, beispielsweise zur Herstellung von PVC-Beschichtungen, ist es unter anderem wünschenswert, einen Weichmacher mit niedriger Geliertemperatur als Schnellgelierer ("fast fuser") zur Verfügung zu haben. Darüber hinaus ist auch eine hohe Lagerstabilität des Plastisols gewünscht, d. h. das nicht-gelierte Plastisol soll bei Umgebungstemperatur keinen oder nur einen geringen Viskositätsanstieg mit der Zeit aufweisen. Diese Eigenschaften sollen möglichst durch Zugabe eines geeigneten Weichmachers mit Schnellgeliereigenschaften erzielt werden, wobei sich der Einsatz von weiteren viskositätsverringernden Additiven und/oder von Lösungsmitteln erübrigen soll.

Allerdings weisen Schnellgelierer in der Regel oft eine verbesserungswürdige Verträglichkeit mit den additivierten Polymeren und eine ebenfalls noch verbesserungswürdige Permanenz auf. Zum Einstellen der gewünschten Weichmacher-Eigenschaften ist daher auch bekannt, Mischungen von Weichmachern einzusetzen, z. B. wenigstens einen Weichmacher, der gute thermoplastische Eigenschaften verleiht, aber weniger gut geliert, in Kombination mit wenigstens einem Schnellgelierer.

Des Weiteren besteht der Bedarf, zumindest einige der eingangs erwähnten Phthalat-Weichmacher zu ersetzen, da diese im Verdacht stehen, gesundheitsschädlich zu sein. Dies gilt speziell für sensible Anwendungsbereiche wie Kinderspielzeug, Lebensmittelverpackungen oder medizinische Artikel.

Im Stand der Technik sind verschiedene alternative Weichmacher mit unterschiedlichen Eigenschaften für diverse Kunststoffe und speziell für PVC bekannt.

Eine aus dem Stand der Technik bekannte Weichmacherklasse, die als Alternative zu Phthalaten eingesetzt werden kann, basiert auf Cyclohexanpolycarbonsäuren, wie sie in der WO 99/32427 beschrieben sind. Im Gegensatz zu ihren unhydrierten aromatischen Analoga sind diese Verbindungen toxikologisch unbedenklich und können auch in sensiblen Anwendungsbereichen eingesetzt werden. Die entsprechenden Niederalkylester besitzen in der Regel schnellgelierende Eigenschaften.

Die WO 00/78704 beschreibt ausgewählte Dialkylcyclohexan-1,3- und 1,4-dicarbonsäureester für die Verwendung als Weichmacher in synthetischen Materialien.

Die US 7,973,194 B1 lehrt die Verwendung von Dibenzylcyclohexan-1,4-dicarboxylat, Benzylbutylcyclohexan-1,4-dicarboxylat und Dibutylcyclohexan-1,4-dicarboxylat als schnellgelierende Weichmacher für PVC.

Eine weitere Weichmacherklasse sind die Ester der 2,5-Furandicarbonsäure (FDCS).

Die WO 2012/113608 beschreibt C₅-Dialkylester der 2,5-Furandicarbonsäure und deren Verwendung als Weichmacher. Diese kurzkettigen Ester eignen sich speziell auch zur Herstellung von Plastisolen.

Die WO 2012/113609 beschreibt C₇-Dialkylester der 2,5-Furandicarbonsäure und deren Verwendung als Weichmacher.

Die WO 2011/023490 beschreibt C₉-Dialkylester der 2,5-Furandicarbonsäure und deren Verwendung als Weichmacher.

Die WO 2011/023491 beschreibt C₁₀-Dialkylester der 2,5-Furandicarbonsäure und deren Verwendung als Weichmacher.

R. D. Sanderson et al. (J. Appl. Pol. Sci., 1994, Vol. 53, 1785-1793) beschreiben die Synthese von Estern der 2,5-Furandicarbonsäure und deren Verwendung als Weichmacher für Kunststoffe, insbesondere Polyvinylchlorid (PVC), Polyvinylbutyral (PVB), Polymilchsäure (PLA), Polyhydroxybuttersäure (PHB) oder Polyalkylmethacrylat (PA-MA). Konkret werden die Di(2-ethylhexyl)-, Di(2-octyl)-, Dihexyl- und Dibutylester der 2,5-Furandicarbonsäure beschrieben und deren weichmachenden Eigenschaften über dynamisch mechanische Thermoanalysen charakterisiert.

Der vorliegenden Erfindung liegt die Aufgabe zugrunde, eine Weichmacher-Zusammensetzung für thermoplastische Polymere und Elastomere zur Verfügung zu stellen, die einerseits gute thermoplastische Eigenschaften und andererseits gute Geliereigenschaften, d. h. eine niedrige Geliertemperatur, verleiht. Die Weichmacher-Zusammensetzung soll sich dadurch insbesondere zur Bereitstellung von Plastisolen eignen. Die Weichmacher-Zusammensetzung soll eine hohe Verträglichkeit mit dem weichzumachenden Polymer aufweisen, eine hohe Permanenz besitzen und zudem toxikologisch unbedenklich sein.

Diese Aufgabe wird überaschenderweise gelöst durch eine Weichmacher-Zusammensetzung, enthaltend
a) wenigstens eine Verbindung der allgemeinen Formel (I), 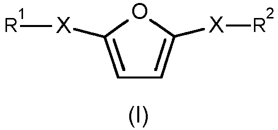 worin
   - X: für ∗-(C=O)-O-, ∗-(CH₂)ₙ-O- oder ∗-(CH₂)ₙ-O-(C=O)- steht, wobei ∗ den Verknüpfungspunkt mit dem Furanring darstellt und n den Wert 0, 1 oder 2 aufweist;
   und
   - R¹ und R²: unabhängig voneinander für einen unverzweigten oder verzweigten C₄-Alkylrest stehen.
b) wenigstens eine Verbindung der allgemeinen Formel (II), 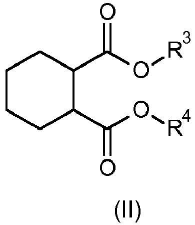 worin
   R³ und R⁴ unabhängig voneinander ausgewählt sind unter verzweigten und unverzweigten C₇-C₁₂-Aikyiresten,
   wobei der Gehalt an Verbindungen der allgemeinen Formel (I) in der Weichmacher-Zusammensetzung 1 bis 50 Gew.-% beträgt.

Ein weiterer Gegenstand der Erfindung sind Formmassen, die wenigstens ein thermoplastisches Polymer oder Elastomer und eine Weichmacher-Zusammensetzung, wie zuvor und im Folgenden definiert, enthalten.

Ein weiterer Gegenstand der Erfindung ist die Verwendung einer Weichmacher-Zusammensetzung, wie zuvor und im Folgenden definiert, als Weichmacher für thermoplastische Polymere, insbesondere Polyvinylchlorid (PVC), und Elastomere.

Ein weiterer Gegenstand der Erfindung ist die Verwendung einer Weichmacher-Zusammensetzung, wie zuvor und im Folgenden definiert, als Weichmacher in Plastisolen.

Ein weiterer Gegenstand der Erfindung ist die Verwendung dieser Formmassen zur Herstellung von Formkörpern und Folien.

### BESCHREIBUNG DER ERFINDUNG

Die erfindungsgemäßen Weichmacher-Zusammensetzungen weisen die folgenden Vorteile auf:
- Die erfindungsgemäßen Weichmacher-Zusammensetzungen zeichnen sich durch eine hohe Verträglichkeit mit den weichzumachenden Polymeren, insbesondere PVC, aus.
- Die erfindungsgemäßen Weichmacher-Zusammensetzungen verleihen den weichzumachenden Polymeren eine hohe Permanenz.
- Die erfindungsgemäßen Weichmacher-Zusammensetzungen eignen sich in vorteilhafter Weise zur Erzielung einer Vielzahl unterschiedlichster und komplexer Verarbeitungs- und Anwendungseigenschaften von Kunststoffen.
- Die erfindungsgemäße Weichmacher-Zusammensetzung eignet sich in vorteilhafter Weise zur Herstellung von Plastisolen.
- Die in der erfindungsgemäßen Weichmacher-Zusammensetzung enthaltenen Verbindungen (I) eignen sich aufgrund ihrer äußerst niedrigen Lösetemperaturen nach DIN 53408 sehr gut als Schnellgelierer. Um die zum Gelieren eines thermoplastischen Polymers erforderliche Temperatur zu verringern und/oder dessen Geliergeschwindigkeit zu erhöhen, reichen bereits geringe Mengen der Verbindungen (I) in der erfindungsgemäßen Weichmacher-Zusammensetzung aus.
- Die erfindungsgemäßen Weichmacher-Zusammensetzungen eignen sich für die Verwendung zur Herstellung von Formkörpern und Folien für sensible Anwendungsbereiche, wie Medizinprodukte, Lebensmittelverpackungen, Produkte für den Innenraumbereich, beispielsweise von Wohnungen und Fahrzeugen, Spielzeuge, Kinderpflegeartikel, etc.
- Zur Herstellung der in den erfindungsgemäßen Weichmacher-Zusammensetzungen enthaltenen Verbindungen (I) können leicht zugängliche Edukte verwendet werden. Ein besonderer ökonomischer und ökologischer Vorteil liegt in der Möglichkeit, zur Herstellung der erfindungsgemäß eingesetzten Verbindungen (I) sowohl in großen Mengen zur Verfügung stehender petrochemischer Rohstoffe als auch nachwachsender Rohstoffe nutzen zu können. So sind beispielsweise die Ausgangsstoffe der Furankerne aus natürlich vorkommenden Kohlenhydraten, wie Cellulose und Stärke, erhältlich, wohingegen die zur Einführung der Seitenketten einsetzbaren Alkohole aus großtechnischen Verfahren zur Verfügung stehen. So kann einerseits der Bedarf an "nachhaltigen" Produkten gedeckt werden, anderseits ist aber auch eine wirtschaftliche Herstellung möglich.
- Die Verfahren zur Herstellung der erfindungsgemäß eingesetzten Verbindungen (I) sind einfach und effizient, wodurch diese problemlos in großtechnischem Maßstab bereitgestellt werden können.

Wie zuvor erwähnt wurde überaschenderweise festgestellt, dass die in der erfindungsgemäßen Weichmacher-Zusammensetzung enthaltenen Verbindungen der allgemeinen Formel (I), insbesondere die C₄-Dialkylester der Furandicarbonsäure, sehr niedrige Lösetemperaturen sowie exzellente Geliereigenschaften aufweisen. So liegen deren Lösetemperaturen nach DIN 53408 deutlich unter den Lösetemperaturen der entsprechenden Dialkylestern der Phthalsäure und besitzen mindestens ebenbürtige schnellgelierende Eigenschaften.

Es wurde gefunden, dass sich die Verbindungen (I) speziell in Kombination mit 1,2-Cyclohexandicarbonsäureestern der allgemeinen Formel (II) zur Verbesserung des Gelierverhaltens von thermoplastischen Polymeren und Elastomeren eignen. Dabei sind bereits geringe Mengen der Verbindungen (I) in der erfindungsgemäßen Weichmacher-Zusammensetzung ausreichend, um die zum Gelieren erforderliche Temperatur zu verringern und/oder die Geliergeschwindigkeit zu erhöhen.

Im Rahmen der vorliegenden Erfindung wird unter einem Schnellgelierer ein Weichmacher verstanden, der eine Lösetemperatur nach DIN 53408 von unter 120 °C aufweist. Solche Schnellgelierer werden insbesondere zur Herstellung von Plastisolen verwendet.

Der Ausdruck "C₄-Alkyl" umfasst geradkettige und verzweigte C₄-Alkylgruppen. Vorzugsweise ist C₄-Alkyl ausgewählt unter n-Butyl, Isobutyl, sec.-Butyl und tert.-Butyl. Besonders bevorzugt steht C₄-Alkyl für n-Butyl oder Isobutyl.

Der Ausdruck "C₇-C₁₂-Alkyl" umfasst geradkettige und verzweigte C₇-C₁₂-Alkylgruppen. Vorzugsweise ist C₇-C₁₂-Alkyl ausgewählt unter n-Heptyl, 1-Methylhexyl, 2-Methylhexyl, 1-Ethylpentyl, 2-Ethylpentyl, 1-Propylbutyl, 1-Ethyl-2-methylpropyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl und dergleichen. Besonders bevorzugt steht C₇-C₁₂-Alkyl für n-Octyl, n-Nonyl, Isononyl, 2-Ethylhexyl, Isodecyl, 2-Propylheptyl, n-Undecyl oder Isoundecyl.

Vorzugsweise weisen die Gruppen X in den Verbindungen der allgemeinen Formel (I) dieselbe Bedeutung auf.

In einer ersten bevorzugten Ausführungsform steht in den Verbindungen der allgemeinen Formel (I) die Gruppen X beide für ∗-(C=O)-O-.

In einer weiteren bevorzugten Ausführungsform stehen in den Verbindungen der allgemeinen Formel (I) die Gruppen X beide für ∗-(CH₂)-O-(C=O)-.

In einer weiteren bevorzugten Ausführungsform stehen in den Verbindungen der allgemeinen Formel (I) die Gruppen X beide für ∗-(CH₂)ₙ-O-, wobei n für 0, 1 oder 2 steht. Besonders bevorzugt steht n für 1.

Bevorzugt stehen in den Verbindungen der allgemeinen Formel (I) die Reste R¹ und R² unabhängig voneinander für einen unverzweigten oder verzweigten C₄-Alkylrest.

Besonders bevorzugt stehen in den Verbindungen der allgemeinen Formel (I) die Reste R¹ und R² unabhängig voneinander für n-Butyl oder Isobutyl.

In einer bevorzugten Ausführung haben in den Verbindungen der allgemeinen Formel (I) die Reste R¹ und R² dieselbe Bedeutung.

Bevorzugte Verbindungen der allgemeinen Formel (I) sind ausgewählt unter
Di-(n-butyl)-2,5-furandicarboxylat,
Di-n-butylether von 2,5-Di(hydroxymethyl)furan,
2,5-Di(hydroxymethyl)furan-di-n-butanoat,
Di-(isobutyl)-2,5-furandicarboxylat,
Di-isobutylether von 2,5-Di(hydroxymethyl)furan,
2,5-Di(hydroxymethyl)furan-di-isobutanoat
sowie Mischungen aus zwei oder mehr als zwei der zuvor genannten Verbindungen.

Eine besonders bevorzugte Verbindung der allgemeinen Formel (I) ist Di-(n-butyl)-2,5-furandicarboxylat.

In einer weiteren bevorzugten Ausführungsform haben in den Verbindungen der allgemeinen Formel (II) die Reste R³ und R⁴ dieselbe Bedeutung.

Bevorzugt stehen in den Verbindungen der allgemeinen Formel (II) die Reste R³ und R⁴ beide für 2-Ethylhexyl, beide für Isononyl oder beide für 2-Propylheptyl.

Eine besonders bevorzugte Verbindung der allgemeinen Formel (II) ist Di-(isononyl)-1,2-cyclohexandicarboxylat.

Durch Anpassung der Anteile der Verbindungen (I) und (II) in der erfindungsgemäßen Weichmacher-Zusammensetzung können die Weichmacher-Eigenschaften auf den entsprechenden Verwendungszweck abgestimmt werden. Für den Einsatz in speziellen Anwendungsbereichen kann es gegebenenfalls hilfreich sein der erfindungsgemäßen Weichmacher-Zusammensetzungen weitere von den Verbindungen (I) und (II) verschiedene Weichmacher hinzuzufügen. Aus diesem Grund kann die erfindungsgemäße Weichmacher-Zusammensetzung gegebenenfalls wenigstens einen weiteren von den Verbindungen (I) und (II) verschiedenen Weichmacher enthalten.

Der von den Verbindungen (I) und (II) verschiedene zusätzliche Weichmacher ist ausgewählt unter Phthalsäuredialkylestern, Phthalsäurealkylaralkylestern, von Verbindungen (II) verschiedenen 1,2-Cyclohexandicarbonsäureestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Mono- und Dicarbonsäuren, Estern von ungesättigten Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, von Verbindungen (I) verschiedenen 2,5-Furandicarbonsäureestern, 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

Geeignete Phthalsäuredialkylester, die in vorteilhafter Weise mit den Verbindungen (I) und (II) gemischt werden können, weisen unabhängig voneinander 4 bis 13 C-Atome, bevorzugt 8 bis 13 C-Atome, in den Alkylketten auf. Ein geeigneter Phthalsäurealkylaralkylester ist beispielsweise Benzylbutylphthalat. Geeignete von den Verbindungen (II) verschiedenen 1,2-Cyclohexandicarbonsäureester weisen unabhängig voneinander jeweils 3 bis 6 C-Atome, bevorzugt 4 bis 6 C-Atome, in den Alkylketten auf. Geeignete Terephthalsäuredialkylester weisen bevorzugt unabhängig voneinander jeweils 4 bis 13 C-Atome, insbesondere 7 bis 11 C-Atome, in den Alkylketten auf. Geeignete Terephthalsäuredialkylester sind beispielsweise Di-(n-butyl)-terephthalsäuredialkylester, Di-(2-ethylhexyl)-terephthalsäuredialkylester, Di-(isononyl)-terephthalsäuredialkylester oder Di-(2-propylheptyl)-terephthalsäuredialkylester. Geeignete Trimellitsäuretrialkylester weisen bevorzugt unabhängig voneinander jeweils 4 bis 13 C-Atome, insbesondere 7 bis 11 C-Atome, in den Alkylketten auf. Geeignete Benzoesäurealkylester weisen bevorzugt unabhängig voneinander jeweils 7 bis 13 C-Atome, insbesondere 9 bis 13 C-Atome, in den Alkylketten auf. Bevorzugte Benzoesäurealkylester sind beispielsweise Isononylbenzoat, Isodecylbenzoat oder 2-Propylheptylbenzoat. Geeignete Dibenzoesäureester von Glycolen sind Diethylenglycoldibenzoat und Dibutylenglycoldibenzoat. Geeignete Ester von gesättigten Mono- und Dicarbonsäuren sind beispielsweise Ester der Essigsäure, Buttersäure, Valeriansäure, Bernsteinsäure oder Milchsäure sowie die Mono- und Dialkylester der Glutarsäure, Adipinsäure, Sebacinsäure, Äpfelsäure oder Weinsäure. Geeignete Adipinsäuredialkylester weisen bevorzugt unabhängig voneinander jeweils 4 bis 13 C-Atome, insbesondere 6 bis 10 C-Atome, in den Alkylketten auf. Geeignete Ester von ungesättigten Dicarbonsäuren sind beispielsweise Ester der Maleinsäure und der Fumarsäure. Geeignete Alkylsulfonsäureester weisen vorzugsweise einen Alkylrest mit 8 bis 22 C-Atomen auf. Dazu zählen beispielsweise der Phenyl- oder Cresylester der Pentadecylsulfonsäure. Geeignete Isosorbidester sind Isosorbiddiester, die bevorzugt unabhängig voneinander jeweils mit C₈-C₁₃-Carbonsäuren verestert sind. Geeignete Phosphorsäureester sind Tri-2-ethylhexylphosphat, Trioctylphosphat, Triphenylphosphat, Isodecyldiphenylphosphat, Bis-(2-ethylhexyl)phenyl-phosphat und 2-Ethylhexyldiphenyl-phosphat. In den Citronensäuretriestern kann die OH-Gruppe in freier oder carboxylierter Form, bevorzugt acetyliert, vorliegen. Die Alkylreste der acetylierten Citronensäuretriester weisen bevorzugt unabhängig voneinander 4 bis 8 C-Atome, insbesondere 6 bis 8 C-Atome, auf. Geeignet sind Alkylpyrrolidonderivate mit Alkylresten von 4 bis 18 C-Atomen. Geeignete von den Verbindungen (I) verschiedenen 2,5-Furandicarbonsäuredialkylester weisen unabhängig voneinander jeweils 7 bis 13 C-Atome, bevorzugt 8 bis 12 C-Atome, in den Alkylketten auf. Geeignete 2,5-Tetrahydrofurandicarbonsäuredialkylester weisen unabhängig voneinander jeweils 7 bis 13 C-Atome, bevorzugt 8 bis 12 C-Atome, in den Alkylketten auf. Geeignete epoxidierte Pflanzenöle sind beispielsweise epoxidierte Fettsäuren aus epoxidertem Sojaöl, z. B. erhältlich von der Firma Galata-Chemicals, Lampertheim, Germany. Epoxidierte Fettsäuremonoalkylester, beispielsweise erhältlich unter dem Handelsnamen reFlex™ der Firma PolyOne, USA, sind auch geeignet. Bei den Polyestern aus aliphatischen und aromatischen Polycarbonsäuren handelt es sich bevorzugt um Polyester der Adipinsäure mit mehrwertigen Alkoholen, insbesondere Dialkylenglycolpolyadipate mit 2 bis 6 Kohlenstoffatomen im Alkylenrest.

In allen zuvor genannten Fällen können die Alkylreste jeweils linear oder verzweigt und jeweils gleich oder verschieden sein. Auf die eingangs gemachten allgemeinen Ausführungen zu geeigneten und bevorzugten Alkylresten wird Bezug genommen.

Der Gehalt des wenigstens einen weiteren von den Verbindungen (I) und (II) verschiedenen Weichmachers in der erfindungsgemäßen Weichmacher-Zusammensetzung beträgt üblicherweise 0 bis 50 Gew.-%, bevorzugt 0 bis 40 Gew.-%, besonders bevorzugt 0 bis 30 Gew.-% und insbesondere 0 bis 25 Gew.-%, bezogen auf die Gesamtmenge des wenigstens einen weiteren Weichmachers und der Verbindungen (I) und (II) in der Weichmacher-Zusammensetzung.

In einer bevorzugten Ausführungsform enthält die erfindungsgemäße Weichmacher-Zusammensetzung keinen weiteren von den Verbindungen (I) und (II) verschiedenen Weichmacher.

Bevorzugt beträgt der Gehalt an Verbindungen der allgemeinen Formel (I) in der erfindungsgemäßen Weichmacher-Zusammensetzung 1 bis 50 Gew.-%, besonders bevorzugt 2 bis 40 Gew.-% und insbesondere 3 bis 30 Gew.-%, bezogen auf die Gesamtmenge der Verbindungen (I) und (II) in der Weichmacher-Zusammensetzung.

Bevorzugt beträgt der Gehalt der Verbindungen der allgemeinen Formel (II) in der erfindungsgemäßen Weichmacher-Zusammensetzung 10 bis 99 Gew.-%, besonders bevorzugt 50 bis 98 Gew.-% und insbesondere 70 bis 97 Gew.-%, bezogen auf die Gesamtmenge der Verbindungen (I) und (II) in der Weichmacher-Zusammensetzung.

In der erfindungsgemäßen Weichmacher-Zusammensetzung liegt das Gewichtsverhältnis zwischen Verbindungen der allgemeinen Formel (I) und Verbindungen der allgemeinen Formel (II) bevorzugt im Bereich von 1 : 100 bis 1 : 1, besonders bevorzugt im Bereich von 1 : 50 bis 1 : 2 und insbesondere im Bereich von 1 : 30 bis 1 : 2.

### Formmassen

Ein weiterer Gegenstand der vorliegenden Erfindung betrifft eine Formmasse, enthaltend wenigstens ein Polymer und eine Weichmacher-Zusammensetzung wie zuvor definiert.

In einer bevorzugten Ausführungsform handelt es sich bei dem in der Formmasse enthaltenen Polymer um ein thermoplastisches Polymer.

Als thermoplastische Polymere kommen alle thermoplastisch verarbeitbaren Polymeren in Frage. Insbesondere sind diese thermoplastischen Polymere ausgewählt unter:
- Homo- oder Copolymere, die wenigstens ein Monomer einpolymerisiert enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten wie beispielsweise Styrol, (Meth)acrylnitril, α,β-ethyienisch ungesättigten Mono- und Dicarbonsäuren, und Maleinsäureanhydrid;
- Homo- und Copolymere von Vinylacetalen;
- Polyvinylestern;
- Polycarbonaten (PC);
- Polyestern, wie Polyalkylenterephthalaten, Polyhydroxyalkanoaten (PHA), Polybutylensuccinaten (PBS), Polybutylensuccinatadipaten (PBSA);
- Polyethern;
- Polyetherketonen;
- thermoplastischen Polyurethanen (TPU);
- Polysulfiden;
- Polysulfonen;
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, Acrylnitril-Butadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder CelluloseAcetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Je nachdem welches thermoplastische Polymer oder thermoplastische Polymergemisch in der Formmasse enthalten ist, werden unterschiedliche Mengen Weichmacher eingesetzt. In der Regel beträgt der Gesamtweichmachergehalt in der Formmasse 0,5 bis 300 phr (parts per hundred resin = Gewichtsteile pro hundert Gewichtsteile Polymer), bevorzugt 0,5 bis 130 phr, besonders bevorzugt 1 bis 35 phr.

Im Speziellen handelt es sich bei dem in der erfindungsgemäßen Formmasse enthaltenen wenigstens einem thermoplastischen Polymer um Polyvinylchlorid (PVC).

Polyvinylchlorid wird durch Homopolymerisation von Vinylchlorid erhalten. Das erfindungsgemäß verwendete Polyvinylchlorid (PVC) kann beispielsweise durch Suspensionspolymerisation, Mikrosuspensionspolymerisation, Emulsionspolymerisation oder Massenpolymerisation hergestellt werden. Die Herstellung von PVC durch Polymerisation von Vinylchlorid sowie Herstellung und Zusammensetzung von weichgemachtem PVC sind beispielsweise beschrieben in "Becker/Braun, Kunststoff-Handbuch, Band 2/1 : Polyvinylchlorid", 2. Auflage, Carl Hanser Verlag, München.

Der K-Wert, der die Molmasse des PVC charakterisiert und nach DIN 53726 bestimmt wird, liegt für das erfindungsgemäß weichgemachte PVC meist zwischen 57 und 90, bevorzugt zwischen 61 und 85, insbesondere zwischen 64 und 75.

Im Rahmen der Erfindung liegt der Gehalt an PVC in den erfindungsgemäßen Frommassen bei 20 bis 95 Gew.-%, bevorzugt bei 45 bis 90 Gew.-% und insbesondere bei 50 bis 85 Gew.-%.

Handelt es sich bei dem thermoplastischen Polymer in den erfindungsgemäßen Formmassen um Polyvinylchlorid beträgt der Gesamtweichmachergehalt in der Formmasse 1 bis 300 phr, bevorzugt 5 bis 130 phr, besonders bevorzugt 10 bis 120 phr und insbesondere 15 bis 100 phr.

Ein weiterer Gegenstand der vorliegenden Erfindung betrifft Formmassen, enthaltend wenigstens ein Elastomer und wenigstens eine Weichmacher-Zusammensetzung wie zuvor definiert.

Bevorzugt handelt es bei dem in den erfindungsgemäßen Formmassen enthaltenen Elastomer um wenigstens einen natürlichen Kautschuk (NR), oder wenigstens einen auf synthetischem Wege hergestellten Kautschuk, oder Mischungen davon. Bevorzugte auf synthetischem Wege hergestellte Kautschuke sind beispielsweise PolyisoprenKautschuk (IR), Styrol-Butadien-Kautschuk (SBR), Butadien-Kautschuk (BR), Nitril-Butadien-Kautschuk (NBR) oder Chloropren-Kautschuk (CR).

Bevorzugt sind Kautschuke oder Kautschuk-Mischungen, welche sich mit Schwefel vulkanisieren lassen.

Im Rahmen der Erfindung liegt der Gehalt an Elastomer in den erfindungsgemäßen Formmassen bei 20 bis 95 Gew.-%, bevorzugt bei 45 bis 90 Gew.-% und insbesondere bei 50 bis 85 Gew.-%.

Im Rahmen der Erfindung können die Formmassen, welche wenigstens ein Elastomer enthalten, zusätzlich zu den vorstehenden Bestandteilen andere geeignete Zusatzstoffe enthalten. Beispielsweise können verstärkende Füllstoffe, wie Ruß oder Siliciumdioxid, weitere Füllstoffe, ein Methylendonor, wie Hexamethylentetramin (HMT), ein Methylenakzeptor, wie mit Cardanol (aus Cashew-Nüssen) modifizierte Phenolharze, ein Vulkanisier- oder Vernetzungsmittel, ein Vulkanisier- oder Vernetzungsbeschleuniger, Aktivatoren, verschiedene Typen von Öl, Alterungsschutzmittel und andere verschiedene Zusatzstoffe, die beispielsweise in Reifen- und anderen Kautschukmassen eingemischt werden, enthalten sein.

Handelt es sich bei dem Polymer in den erfindungsgemäßen Formmassen um Kautschuke, beträgt der Gehalt der erfindungsgemäßen Weichmacherzusammensetzung, wie oben definiert, in der Formmasse 1 bis 60 phr, bevorzugt 1 bis 40 phr, besonders bevorzugt 2 bis 30 phr.

### Zusatzstoffe Formmasse

Im Rahmen der Erfindung können die Formmassen, enthaltend wenigstens ein thermoplastisches Polymer, andere geeignete Zusatzstoffe enthalten. Beispielsweise können Stabilisatoren, Gleitmittel, Füllstoffe, Pigmente, Flamminhibitoren, Lichtstabilisatoren, Treibmittel, polymere Verarbeitungshilfsmittel, Schlagzähverbesserer, optische Aufheller, Antistatika oder Biostabilisatoren enthalten sein.

Im Folgenden werden einige geeignete Zusatzstoffe näher beschrieben. Die aufgeführten Beispiele stellen jedoch keine Einschränkung der erfindungsgemäßen Formmassen dar, sondern dienen lediglich der Erläuterung. Alle Angaben zum Gehalt sind in Gew.-%-Angaben bezogen auf die gesamte Formmasse.

Als Stabilisatoren kommen alle üblichen PVC-Stabilisatoren in fester und flüssiger Form in Betracht, beispielsweise übliche Ca/Zn-, Ba/Zn-, Pb- oder Sn-Stabilisatoren sowie auch säurebindende Schichtsilikate, wie Hydrotalcit.

Die erfindungsgemäßen Formmassen können einen Gehalt an Stabilisatoren von 0,05 bis 7 %, bevorzugt 0,1 bis 5 %, besonders bevorzugt von 0,2 bis 4 % und insbesondere von 0,5 bis 3 % aufweisen.

Gleitmittel sollten zwischen den PVC-Pastillen wirksam werden und Reibungskräften beim Mischen, Plastifizieren und Verformen entgegenwirken.

Als Gleitmittel können die erfindungsgemäßen Formmassen alle die für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20 Kohlenstoffatomen, Ketone, Carbonsäuren, wie Fettsäuren und Montansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die erfindungsgemäßen Formmassen können einen Gehalt an Gleitmittel von 0,01 bis 10 %, bevorzugt 0,05 bis 5 %, besonders bevorzugt von 0,1 bis 3 % und insbesondere von 0,2 bis 2 % aufweisen.

Füllstoffe beeinflussen vor allem die Druck-, Zug-, und Biegefestigkeit sowie die Härte und Wärmeformbeständigkeit von weichgemachtem PVC in positiver Weise.

Im Rahmen der Erfindung können die Formmassen auch Füllstoffe, wie beispielsweise Ruß und andere organische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeenerde, Aluminiumsilikate, wie Kaolin, Glimmer und Feldspat enthalten. Vorzugsweise werden als Füllstoffe, Calciumcarbonate, Kreide, Dolomit, Kaolin, Silikate, Talkum oder Ruß eingesetzt.

Die erfindungsgemäßen Formmassen können einen Gehalt an Füllstoffen von 0,01 bis 80 %, bevorzugt 0,1 bis 60 %, besonders bevorzugt von 0,5 bis 50 % und insbesondere von 1 bis 40 % aufweisen.

Die erfindungsgemäßen Formmassen können auch Pigmente enthalten, um das erhaltene Produkt an unterschiedliche Einsatzmöglichkeiten anzupassen.

Im Rahmen der vorliegenden Erfindung können sowohl anorganische Pigmente als auch organische Pigmente eingesetzt werden. Als anorganische Pigmente können beispielsweise Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chinacridone, Phthalocyaninpigmente, Dioxazinpigmente und Anilinpigmente in Betracht.

Die erfindungsgemäßen Formmassen können einen Gehalt an Pigmenten von 0,01 bis 10 %, bevorzugt 0,05 bis 5 %, besonders bevorzugt von 0,1 bis 3 % und insbesondere von 0,5 bis 2 % aufweisen.

Um die Entflammbarkeit zu vermindern und die Rauchentwicklung beim Verbrennen zu verringern, können die erfindungsgemäßen Formmassen auch Flamminhibitoren enthalten.

Als Flamminhibitoren können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden.

Die erfindungsgemäßen Formmassen können einen Gehalt an Flamminhibitoren von 0,01 bis 10 %, bevorzugt 0,1 bis 8 %, besonders bevorzugt von 0,2 bis 5 % und insbesondere von 0,5 bis 2 % aufweisen.

Um aus den erfindungsgemäßen Formmassen hergestellte Artikel vor einer Schädigung im Oberflächenbereich durch den Einfluss von Licht zu schützen, können die Formmassen auch Lichtstabilisatoren, z. B. UV-Absorber, enthalten.

Als Lichtstabilisatoren können im Rahmen der vorliegenden Erfindung beispielsweise Hydroxybenzophenone, Hydroxyphenylbenzotriazole, Cyanoacrylate oder sogenannte "hindered aminine light stabilizers" (HALS), wie die Derivate von 2,2,6,6-Tetramethylpiperidin, eingesetzt werden.

Die erfindungsgemäßen Formmassen können einen Gehalt an Lichtstabilisatoren, z. B. UV-Absorber, von 0,01 bis 7 %, bevorzugt 0,1 bis 5 %, besonders bevorzugt von 0,2 bis 4 % und insbesondere von 0,5 bis 3 % aufweisen.

### Herstellung der Verbindungen der allgemeinen Formel (I)

Im Folgenden wird die Herstellung der in den erfindungsgemäßen Weichmacher-Zusammensetzungen enthaltenen Verbindungen der allgemeinen Formel (I) beschrieben.

### Herstellung der Diester der 2,5-Furandicarbonsäure

Verbindungen der allgemeinen Formel (I.1), 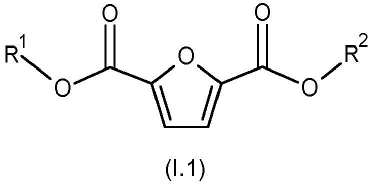 worin R¹ und R² die zuvor genannten Bedeutungen aufweisen, sind erhältlich durch ein Verfahren bei dem man
a) gegebenenfalls 2,5-Furandicarbonsäure oder ein Anhydrid oder Säurehalogenid davon mit einem C₁-C₃-Alkanol in Gegenwart eines Katalysators unter Erhalt eines Di-(C₁-C₃-Alkyl)-2,5-furandicarboxylats umsetzt,
b) 2,5-Furandicarbonsäure oder ein Anhydrid oder Säurehalogenid davon oder das in Schritt a) erhaltene Di-(C₁-C₃-Alkyl)-2,5-furandicarboxylat mit wenigstens einem Alkohol R¹-OH und, falls R¹ und R² unterschiedliche Bedeutung haben, zusätzlich mit wenigstens einem Alkohol R²-OH in Gegenwart wenigstens eines Katalysators unter Erhalt einer Verbindung der Formel (I.1) umsetzt.

Bezüglich geeigneter und bevorzugter Ausführungsformen der Reste R¹ und R² wird auf die vorherigen Angaben in vollem Umfang Bezug genommen.

Für den Einsatz in Schritt a) geeignete C₁-C₃-Alkanole sind z. B. Methanol, Ethanol, n-Propanol oder Gemische davon.

In Schritt b) des Verfahrens wird die 2,5-Furandicarbonsäure oder das in Schritt a) erhaltene Di-(C₁-C₃-Alkyl)-2,5-furandicarboxylat einer Veresterung bzw. Umesterung mit wenigstens einem Alkohol R¹-OH und, falls R¹ und R² unterschiedliche Bedeutung haben, zusätzlich mit wenigstens einem Alkohol R²-OH zu den Verbindungen der Formel (I.1) unterzogen.

### Veresterung

Die Überführung der 2,5-Furandicarbonsäure (FDCS) in die entsprechenden Di-(C₁-C₃-Alkyl)-2,5-furandicarboxylate und/oder Esterverbindungen der allgemeinen Formeln (I.1) kann nach üblichen dem Fachmann bekannten Verfahren erfolgen. Dazu zählt die Umsetzung wenigstens einer Alkoholkomponente, ausgewählt aus C₁-C₃-Alkanolen oder den Alkoholen R¹-OH bzw. R²-OH, mit FDCS oder einem geeigneten Derivat davon. Geeignete Derivate sind z. B. die Säurehalogenide und Säureanhydride. Ein bevorzugtes Säurehalogenid ist das Säurechlorid. Als Veresterungskatalysatoren können die dafür üblichen Katalysatoren eingesetzt werden, z. B. Mineralsäuren, wie Schwefelsäure und Phosphorsäure; organische Sulfonsäuren, wie Methansulfonsäure und p-Toluolsulfonsäure; amphotere Katalysatoren, insbesondere Titan-, Zinn (IV)- oder Zirkoniumverbindungen, wie Tetraalkoxytitane, z. B. Tetrabutoxytitan, und Zinn (IV)-oxid. Das bei der Reaktion entstehende Wasser kann durch übliche Maßnahmen, z. B. destillativ, entfernt werden. Die WO 02/38531 beschreibt ein Verfahren zur Herstellung von Estern multibasischer Carbonsäuren, bei dem man a) in einer Reaktionszone ein im Wesentlichen aus der Säurekomponente oder einem Anhydrid davon und der Alkoholkomponente bestehendes Gemisch in Gegenwart eines Veresterungskatalysators zum Sieden erhitzt, b) die Alkohol und Wasser enthaltenden Dämpfe rektifikativ in eine alkoholreiche Fraktion und eine wasserreiche Fraktion auftrennt, c) die alkoholreiche Fraktion in die Reaktionszone zurück führt und die wasserreiche Fraktion aus dem Verfahren ausleitet. Das in der WO 02/38531 beschriebene Verfahren sowie die darin offenbarten Katalysatoren eignen sich ebenfalls für die Veresterung.

Der Veresterungskatalysator wird in einer wirksamen Menge eingesetzt, die üblicherweise im Bereich von 0,05 bis 10 Gew.-%, vorzugsweise 0,1 bis 5 Gew.-%, bezogen auf die Summe von Säurekomponente (oder Anhydrid) und Alkoholkomponente, liegt.

Weitere geeignete Verfahren zur Herstellung der Verbindungen der allgemeinen Formel (I.1) mittels Veresterung sind beispielsweise in der US 6,310,235, US 5,324,853, DE-A 2612355 oder DE-A 1945359. Auf die genannten Dokumente wird in vollem Umfang Bezug genommen.

In der Regel erfolgt die Veresterung von FDCS bevorzugt in Anwesenheit der oben beschriebenen Alkoholkomponenten, mittels einer organischen Säure oder Mineralsäure, insbesondere konzentrierter Schwefelsäure. Dabei wird die Alkoholkomponente vorteilhafterweise wenigstens in der doppelten stöchiometrischen Menge, bezogen auf die Menge an FDCS oder einem geeigneten Derivat davon in der Reaktionsmischung, eingesetzt.

Die Veresterung kann in der Regel bei Umgebungsdruck oder vermindertem oder erhöhtem Druck erfolgen. Bevorzugt wird die Veresterung bei Umgebungsdruck oder vermindertem Druck durchgeführt.

Die Veresterung kann in Abwesenheit eines zugesetzten Lösungsmittels oder in Gegenwart eines organischen Lösungsmittels durchgeführt werden.

Falls die Veresterung in Gegenwart eines Lösungsmittels durchgeführt wird, handelt es sich dabei vorzugsweise um ein unter den Reaktionsbedingungen inertes organisches Lösungsmittel. Dazu gehören beispielsweise aliphatische Kohlenwasserstoffe, halogenierte aliphatische Kohlenwasserstoffe, aromatische und substituierte aromatische Kohlenwasserstoffe oder Ether. Bevorzugt ist das Lösungsmittel ausgewählt unter Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzolen, Dibutylether, THF, Dioxan und Mischungen davon.

Die Veresterung wird üblicherweise in einem Temperaturbereich von 50 bis 250 °C durchgeführt.

Ist der Veresterungskatalysator ausgewählt unter organischen Säuren oder Mineralsäuren, wird die Veresterung üblicherweise in einem Temperaturbereich von 50 bis 160 °C durchgeführt.

Ist der Veresterungskatalysator ausgewählt unter amphoteren Katalysatoren, wird die Veresterung üblicherweise in einem Temperaturbereich von 100 bis 250 °C durchgeführt.

Die Veresterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt erfolgt die Veresterung ohne die Zugabe eines Inertgases.

### Umesterung:

Die Umesterung der Di-(C₁-C₃-Alkyl)-2,5-furandicarboxylate zu den entsprechenden Esterverbindungen I.1 gemäß dem Verfahrensschritt b) kann nach üblichen dem Fachmann bekannten Verfahren erfolgen. Dazu zählt die Umsetzung der Di-(C₁-C₃)-Alkylester mit wenigstens einem C₄-Alkanol in Anwesenheit eines geeigneten Umesterungskatalysators.

Als Umesterungskatalysatoren kommen die üblichen gewöhnlich für Umesterungsreaktionen verwendeten Katalysatoren in Betracht, die meist auch bei Veresterungsreaktionen eingesetzt werden. Hierzu zählen z. B. Mineralsäuren, wie Schwefelsäure und Phosphorsäure; organische Sulfonsäuren, wie Methansulfonsäure und p-Toluolsulfonsäure; oder spezielle Metallkatalysatoren aus der Gruppe der Zinn (IV)-Katalysatoren, beispielsweise Dialkylzinndicarboxylate wie Dibutylzinndiacetat, Trialkylzinnalkoxide, Monoalkylzinnverbindungen wie Monobutylzinndioxid, Zinnsalze wie Zinnacetat oder Zinnoxide; aus der Gruppe der Titankatalysatoren, monomere und polymere Titanate und Titanchelate wie Tetraethylorthotitanat, Tetrapropylorthotitanat, Tetrabutylorthotitanat, Triethanolamintitanat; aus der Gruppe der Zirkonkatalysatoren, Zirkonate und Zirkonchelate wie Tetrapropylzirkonat, Tetrabutylzirkonat, Triethanolaminzirkonat; sowie Lithiumkatalysatoren wie Lithiumsalze, Lithiumalkoxide; oder Aluminium(III)-, Chrom(III)-, Eisen(III)-, Kobalt(II)-, Nickel(II) und Zink(II)-acetylacetonat.

Die Menge an eingesetztem Umesterungskatalysator liegt bei 0,05 bis 5 Gew.-%, bevorzugt bei 0,1 bis 1 Gew.-%. Das Reaktionsgemisch wird bevorzugt bis zum Siedepunkt des Reaktionsgemisches erhitzt, so dass die Reaktionstemperatur in Abhängigkeit von den Reaktanten zwischen 20 °C und 200 °C liegt.

Die Umesterung kann bei Umgebungsdruck oder vermindertem oder erhöhtem Druck erfolgen. Bevorzugt wird die Umesterung bei einem Druck von 0,001 bis 200 bar, besonders bevorzugt 0,01 bis 5 bar, durchgeführt. Der bei der Umesterung abgespaltene, niedriger siedende Alkohol wird zwecks Verschiebung des Gleichgewichts der Umesterungsreaktion bevorzugt kontinuierlich abdestilliert. Die hierzu benötigte Destillationskolonne steht in der Regel in direkter Verbindung mit dem Umesterungsreaktor, vorzugsweise ist sie direkt an diesem installiert. Im Falle der Verwendung mehrerer in Serie geschalteter Umesterungsreaktoren, kann jeder dieser Reaktoren mit einer Destillationskolonne ausgerüstet sein oder es kann, vorzugsweise aus den letzten Kesseln der Umesterungsreaktorkaskade, das abgedampfte Alkoholgemisch über eine oder mehrere Sammelleitungen einer Destillationskolonne zugeführt werden. Der bei dieser Destillation zurückgewonnene höhersiedende Alkohol wird vorzugsweise wieder in die Umesterung zurückgeführt.

Im Falle der Verwendung eines amphoteren Katalysators gelingt dessen Abtrennung im Allgemeinen durch Hydrolyse und anschließende Abtrennung des gebildeten Metalloxids, z. B. durch Filtration. Bevorzugt wird nach erfolgter Reaktion der Katalysator mittels Waschen mit Wasser hydrolysiert und das ausgefallene Metalloxid abfiltriert. Gewünschtenfalls kann das Filtrat einer weiteren Aufarbeitung zur Isolierung und/oder Reinigung des Produkts unterzogen werden. Bevorzugt wird das Produkt destillativ abgetrennt.

Die Umesterung der Di-(C₁-C₃-Alkyl)-2,5-Furandicarboxylate erfolgt bevorzugt in Anwesenheit der Alkoholkomponente und in Gegenwart wenigstens eines Titan (IV)-Alkoholats. Bevorzugte Titan (IV)-Alkoholate sind Tetrapropoxytitan, Tetrabutoxytitan oder Gemische davon. Bevorzugt wird die Alkoholkomponente wenigstens in der doppelten stöchiometrischen Menge, bezogen auf die eingesetzten Di-(C₁-C₃-Alkyl)-Ester eingesetzt.

Die Umesterung kann in Abwesenheit oder in Gegenwart eines zugesetzten organischen Lösungsmittels durchgeführt werden. Bevorzugt wird die Umesterung in Gegenwart eines inerten organischen Lösungsmittels durchgeführt. Geeignete organische Lösungsmittel sind die zuvor für die Veresterung genannten. Dazu zählen speziell Toluol und THF.

Die Temperatur bei der Umesterung liegt vorzugsweise in einem Bereich von 50 bis 200 °C.

Die Umesterung kann in Abwesenheit oder in Gegenwart eines Inertgases erfolgen. Unter einem Inertgas wird in der Regel ein Gas verstanden, welches unter den gegebenen Reaktionsbedingungen keine Reaktionen mit den an der Reaktion beteiligten Edukten, Reagenzien, Lösungsmitteln oder den entstehenden Produkten eingeht. Bevorzugt wird die Umesterung ohne Hinzufügen eines Inertgases durchgeführt.

Eine besonders geeignete Ausgestaltung des Verfahrens umfasst:
a) Umsetzung von 2,5-Furandicarbonsäure mit Methanol in Gegenwart von konzentrierter Schwefelsäure unter Erhalt des 2,5-Furandicarbonsäuredimethylesters,
b) Umsetzung des in Schritt a) erhaltenen 2,5-Furandicarbonsäuredimethylesters mit wenigstens einem Alkohol R¹-OH in Gegenwart wenigstens eines Titan (IV)-Alkoholats zu den Verbindungen der allgemeinen Formel (I.1).

### Herstellung der C₄-Diether- bzw. C₄-Diesterderivate der Formel (I.2) bzw. (I.3)

Verbindungen der allgemeinen Formel (I.2) oder (I.3), 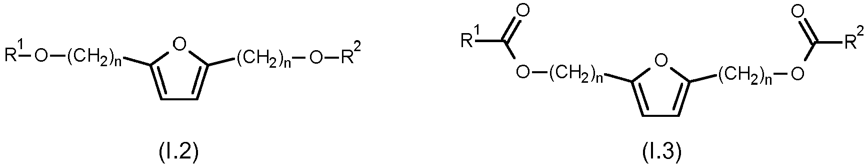 worin R¹ und R² eine der zuvor genannten Bedeutungen und n den Wert 1 oder 2 aufweist, sind erhältlich durch ein Verfahren, bei dem man entweder
a) 2,5-Di-(hydroxymethyl)furan (n = 1) oder 2,5-Di-(hydroxyethyl)furan (n = 2) mit wenigstens einem Alkylierungsreagenz R¹-Z und, falls R¹ und R² unterschiedliche Bedeutung haben, zusätzlich mit wenigstens einem Alkylierungsreagenz R²-Z, wobei Z für eine Abgangsgruppe steht, in Gegenwart einer Base zu Verbindungen der Formel (I.2) umsetzt,
   oder
b) 2,5-Di-(hydroxymethyl)furan (n = 1) oder 2,5-Di-(hydroxyethyl)furan (n = 2) mit wenigstens einem Säurehalogenid R¹-(C=O)X und, falls R¹ und R² unterschiedliche Bedeutung haben, zusätzlich mit wenigstens einem Säurehalogenid R²-(C=O)X, wobei X für Br oder Cl steht, in Gegenwart wenigstens eines tertiären Amins in Verbindungen der Formel (I.3) umgesetzt.

In der Regel wird die Alkylierung in Gegenwart eines unter den Reaktionsbedingungen inerten organischen Lösungsmittels durchgeführt. Geeignete Lösungsmittel sind die zuvor bei der Veresterung genannten. Bevorzugtes Lösungsmittel sind aromatische Kohlenwasserstoffe, wie Toluol.

Die Abgangsgruppe Z steht bevorzugt für einen Rest, der ausgewählt ist unter Br, Cl, der Tosyl-, Mesyl- oder Triflyl-Gruppe.

Besonders bevorzugt steht die Abgangsgruppe Z für Br.

Die Alkylierungsreagenzien R¹-Z bzw. R²-Z sind im Handel erhältlich oder können über geeignete dem Fachmann geläufige Reaktionen oder Verfahrensweisen aus den entsprechenden Alkoholen hergestellt werden. Beispielsweise lassen sich die für dieses Verfahren bevorzugt verwendeten Alkylbromide R¹-Br bzw. R²-Br in bekannter Weise großtechnisch unter Verwendung von Bromwasserstoff (HBr) aus den entsprechenden Alkoholen R¹-OH bzw. R²-OH herstellen.

Als geeignete Basen kommen mineralische und/oder starke organische Basen in Betracht. Dazu gehören z. B. anorganische Basen oder Basenbildner, wie Hydroxide, Hydride, Amide, Oxide und Carbonate der Alkali- und Erdalkalimetalle. Dazu gehören LiOH, NaOH, KOH, Mg(OH)₂, Ca(OH)₂, LiH, NaH, Natriumamid (NaNH₂), Lithiumdiisopropylamid (LDA), Na₂O, K₂CO₃, Na₂CO₃ und Cs₂CO₃; sowie metallorganische Verbindungen wie n-BuLi oder tert.-BuLi. Bevorzugt sind NaOH, KOH, K₂CO₃ und Na₂CO₃.

Die Base wird dabei bevorzugt in einem wenigstens zweifachen stöchiometrischen Überschuss, bezogen auf das 2,5-Di-(hydroxymethyl)furan bzw. 2,5-Di-(hydroxyethyl)furan, eingesetzt. Besonders bevorzugt wird ein wenigstens vierfacher stöchiometrischer Überschuss an Base verwendet.

Die Alkylierung kann in Abwesenheit oder in Gegenwart eines organischen Lösungsmittels durchgeführt werden. In der Regel wird die Reaktion in Gegenwart eines inerten organischen Lösungsmittels, wie Pentan, Hexan, Heptan, Ligroin, Petrolether, Cyclohexan, Dichlormethan, Trichlormethan, Tetrachlormethan, Benzol, Toluol, Xylol, Chlorbenzol, Dichlorbenzole, Dibutylether, THF, Dioxan und Mischungen davon, durchgeführt.

Die Alkylierung kann in der Regel bei Umgebungsdruck, vermindertem Druck oder erhöhtem Druck erfolgen. Bevorzugt wird die Alkylierung bei Umgebungsdruck durchgeführt.

Bevorzugt wird die Alkylierung in einem Temperaturbereich von 30 bis 200 °C, bevorzugt 50 bis 150 °C, durchgeführt.

Die Alkylierung kann in Abwesenheit oder in Gegenwart eines Inertgases erfolgen. Bevorzugt wird bei der Alkylierung kein Inertgas eingesetzt.

In einer speziellen geeigneten Ausgestaltung der Alkylierung wird 2,5-Di-(hydroxymethyl)furan bzw. 2,5-Di-(hydroxyethyl)furan in Gegenwart eines wenigstens vierfachen Überschusses an Base in einem inerten organischen Lösungsmittel und mit wenigstens einem Alkylbromid R¹-Br bzw. R²-Br in die Dietherverbindungen der allgemeinen Formel (I.2) überführt. Bezüglich der Reste R¹ und R² wird auf die vorherigen Ausführungen Bezug genommen. Bevorzugt wird als Base ein Alkalihydroxid, insbesondere KOH, eingesetzt.

Zur Herstellung der Esterverbindungen der allgemeinen Formel (I.3) wird bevorzugt 2,5-Di-(hydroxymethyl)furan bzw. 2,5-Di-(hydroxyethyl)furan mit wenigstens einem Säurehalogenid R¹-(C=O)X und, falls R¹ und R² unterschiedliche Bedeutung haben, mit wenigstens einem Säurehalogenid R²-(C=O)X, wobei X für Br oder Cl steht, in Gegenwart wenigstens eines tertiären Amins, zu den Verbindungen der Formel (I.3) umgesetzt.

Neben diesem Verfahren stehen dem Fachmann noch weitere geläufige Veresterungsmethoden zur Verfügung, wie zuvor im Falle der Veresterung von FDCS beschrieben.

Zur Herstellung der Esterverbindungen der allgemeinen Formel (I.3) können üblicherweise alle dem Fachmann geläufige Arten von tertiären Aminen verwendet werden. Beispiele für geeignete tertiäre Amine sind:
- aus der Gruppe der Trialkylamine: Trimethylamin, Triethylamin, Tri-n-propylamin, Diethylisopropylamin, Diisopropylethylamin und dergleichen;
- aus der Gruppe der N-Cycloalkyl-N,N-dialkylamine: Dimethylcyclohexylamin und Diethylcyclohexylamin;
- aus der Gruppe der N,N-Dialkylaniline: Dimethylanilin und Diethylanilin;
- aus der Gruppe der Pyridin- und Chinolinbasen: Pyridin, α-, β- und γ-Picolin, Chinolin und 4-(Dimethylamino)pyridin (DMAP).

Bevorzugte tertiäre Amine sind Trialkylamine und Pyridinbasen, insbesondere Triethylamin und 4-(Dimethylamino)pyridin (DMAP) sowie Gemische davon.

Die Veresterung kann bei Umgebungsdruck, bei vermindertem oder erhöhtem Druck erfolgen. Bevorzugt wird die Veresterung bei Umgebungsdruck durchgeführt.

Die Veresterung kann in Abwesenheit oder in Gegenwart eines organischen Lösungsmittels durchgeführt werden. Bevorzugt wird die Veresterung in Gegenwart eines inerten organischen Lösungsmittels, wie zuvor definiert, durchgeführt.

Die Veresterung wird üblicherweise in einem Temperaturbereich von 50 bis 200 °C durchgeführt.

Die Veresterung kann in Abwesenheit oder in Gegenwart eines Inertgases erfolgen.

In einer bevorzugten Ausgestaltung des Verfahrens zur Herstellung der Verbindungen I.3 wird 2,5-Di-(hydroxymethyl)furan mit einem Säurechlorid R¹-(C=O)Cl in Gegenwart von Triethylamin und/oder DMAP und eines inerten organischen Lösungsmittels zu Verbindungen der Formel (I.3) umgesetzt.

Zur Herstellung der Verbindungen der allgemeinen Formel (I) werden C₄-Alkanole als Edukte verwendet.

Bevorzugte C₄-Alkanole können geradkettig oder verzweigt sein oder aus Gemischen aus geradkettigen und verzweigten Butanolen bestehen. Dazu zählen 1-Butanol, 2-Butanol, 2-Methyl-1-propanol oder 2-Methyl-2-propanol sowie Gemische davon. Bevorzugt sind 1-Butanol oder 2-Methyl-1-propanol.

Die zur Herstellung der Verbindungen der allgemeinen Formel (I) eingesetzte Furan-2,5-dicarbonsäure (FDCS, CAS Nr. 3238-40-2) kann entweder kommerziell erworben oder nach literaturbekannten Synthesewegen hergestellt werden. So finden sich Möglichkeiten zur Synthese in der im Internet veröffentlichten Publikation von Lewkowski et al. mit dem Titel "Synthesis, Chemistry and Application of 5-hydroxymethylfurfural and its derivatives" (Lewkowski et al., ARKIVOC 2001 (i), Seiten 17-54, ISSN 1424-6376). Den meisten dieser Synthesen gemein ist eine säurekatalysierte Umsetzung von Kohlenhydraten, besonders Glucose, Fructose, bevorzugt Fructose zum 5-Hydroxymethylfurfural (5-HMF), welches durch verfahrenstechnische Operationen, wie beispielsweise Zweiphasen-Fahrweise, aus dem Reaktionsgemisch abgetrennt werden kann. Entsprechende Ergebnisse wurden beispielsweise von Leshkov et al. in Science 2006, Vol. 312, Seiten 1933-1937 und von Zhang et al. in Angewandte Chemie 2008, Vol. 120, Seiten 9485-9488 beschrieben. In einem weiteren Schritt kann die 5-HMF dann zu FDCS oxidiert werden, wie beispielsweise von Christensen in ChemSusChem 2007, Vol. 1, Seiten 75-78 zitiert.

2,5-Bis(hydroxymethyl)furan (CAS Nr. 1883-75-6) kann ebenfalls entweder kommerziell erworben oder synthetisiert werden. Die beschriebenen Synthesen erfolgen ausgehend von 5-HMF, welches in zwei Schritten über 2,5-Bis(hydroxymethyl)furan (2,5-BHF) reduziert werden kann (Lewkowski et al., ARKIVOC 2001 (i), Seiten 17-54, ISSN 1424-6376).

2,5-Bis(hydroxyethyl)furan kann durch Reduktion des 2,5-Furandiessigsäuremethylesters erhalten werden. 2,5-Furandiessigsäuremethylester kann über geeignete dem Fachmann geläufige Reaktionen aus 2,5-Bis(hydroxymethyl)furan (2,5-BHF) synthetisiert werden, wie beispielsweise analog dem von Rau et al. in Liebigs Ann. Chem., Vol. 1984 (8. 1984), Seiten 1504-1512, ISSN 0947-3440, beschriebenen Verfahren. Dabei wird aus 2,5-BHF durch Umsetzung mit Thionylchlorid 2,5-Bis(chlormethyl)furan dargestellt, welches durch Einwirkung von KCN in Benzol in Gegenwart von [18]Krone-6 zu 2,5-Bis(cyanomethyl)furan umgesetzt wird. Das 2,5-Bis(cyanomethyl)furan kann anschließend zur 2,5-Furandiessigsäure verseift und mit Methanol zum Dimethylester verestert werden oder durch Alkoholyse mit Methanol direkt in den 2,5-Furandiessigsäuremethylester überführt werden (Pinner-Reaktion). Der 2,5-Furandiessigsäuremethylester kann dann zu 2,5-Bis(hydroxyethyl)furan reduziert werden.

Die Darstellung des 2,5-Furandiessigsäuremethylesters kann ebenfalls analog dem von Kern et al. in Liebigs Ann. Chem., Vol. 1985 (6. 1985), Seiten 1168-1174, ISSN 0947-3440, beschriebenen Verfahren erfolgen.

### Verbindungen der allgemeinen Formel (II)

Die Verbindungen der allgemeinen Formel (II) können entweder kommerziell erworben oder nach im Stand der Technik bekannten Verfahren hergestellt werden.

In der Regel werden die 1,2-Cyclohexandicarbonsäureester meist durch Kernhydrierung der entsprechenden Phthalsäureester erhalten. Die Kernhydrierung kann nach dem in der WO 99/32427 beschriebenen Verfahren erfolgen. Ein besonders geeignetes Kernhydrierungsverfahren beschreibt beispielsweise auch die WO 2011082991 A2.

Des Weiteren können 1,2-Cyclohexandicarbonsäureester durch Veresterung von 1,2-Cyclohexandicarbonsäure oder geeigneten Derivaten davon mit den entsprechenden Alkoholen erhalten werden. Die Veresterung kann nach üblichen dem Fachmann bekannten Verfahren erfolgen.

Den Verfahren zur Herstellung der Verbindungen der allgemeinen Formel (II) ist gemein, dass ausgehend von Phthalsäure, 1,2-Cyclohexandicarbonsäure oder geeigneten Derivaten davon, eine Veresterung bzw. eine Umesterung durchgeführt wird, wobei die entsprechenden C₇-C₁₂-Alkanolen als Edukte eingesetzt werden. Bei diesen Alkoholen handelt es sich in der Regel nicht um reine Substanzen, sondern um Isomerengemische, deren Zusammensetzung und Reinheitsgrad von dem jeweiligen Verfahren abhängt, mit dem diese dargestellt werden.

Bevorzugte C₇-C₁₂-Alkanole, die zur Herstellung der in der erfindungsgemäßen Weichmacher-Zusammensetzung enthaltenen Verbindungen (II) eingesetzt werden, können geradkettig oder verzweigt sein oder aus Gemischen aus geradkettigen und verzweigten C₇-C₁₂-Alkanolen bestehen. Dazu zählen n-Heptanol, Isoheptanol, n-Octanol, Isooctanol, 2-Ethylhexanol, n-Nonanol, Isononanol, Isodecanol, 2-Propylheptanol, n-Undecanol, Isoundecanol, n-Dodecanol oder Isododecanol. Besonders bevorzugte C₇-C₁₂-Alkanole sind 2-Ethylhexanol, Isononanol und 2-Propylheptanol, insbesondere Isononanol.

### Heptanol

Die zur Herstellung der Verbindungen der allgemeinen Formel (II) eingesetzten Heptanole können geradkettig oder verzweigt sein oder aus Gemischen aus geradkettigen und verzweigten Heptanolen bestehen. Bevorzugt werden Gemische aus verzweigten Heptanolen, auch als Isoheptanol bezeichnet, verwendet, die durch die Rhodium- oder vorzugsweise Kobalt-katalysierte Hydroformylierung von Dimerpropen, erhältlich z. B. nach dem Dimersol®-Verfahren, und anschließende Hydrierung der erhaltenen Isoheptanale zu einem Isoheptanol-Gemisch hergestellt werden. Entsprechend seiner Herstellung besteht das so gewonnene Isoheptanol-Gemisch aus mehreren Isomeren. Im Wesentlichen geradkettige Heptanole können durch die Rhodium- oder vorzugsweise Kobalt-katalysierte Hydroformylierung von 1-Hexen und anschließende Hydrierung des erhaltenen n-Heptanals zu n-Heptanol erhalten werden. Die Hydroformylierung von 1-Hexen bzw. Dimerpropen kann nach an sich bekannten Verfahren erfolgen: Bei der Hydroformylierung mit homogen im Reaktionsmedium gelösten Rhodiumkatalysatoren können sowohl unkomplexierte Rhodiumcarbonyle, die in situ unter den Bedingungen der Hydroformylierungsreaktion im Hydroformylierungsreaktionsgemisch unter Einwirkung von Synthesegas z. B. aus Rhodiumsalzen gebildet werden, als auch komplexe Rhodiumcarbonylverbindungen, insbesondere Komplexe mit organischen Phosphinen, wie Triphenylphosphin, oder Organophosphiten, vorzugsweise chelatisierenden Biphosphiten, wie z. B. in US-A 5288918 beschrieben, als Katalysator verwendet werden. Bei der Kobalt-katalysierten Hydroformylierung dieser Olefine werden im Allgemeinen homogen im Reaktionsgemisch lösliche Kobaltcarbonyl-Verbindungen eingesetzt, die sich unter den Bedingungen der Hydroformylierungsreaktion unter Einwirkung von Synthesegas in situ aus Kobaltsalzen bilden. Wird die Kobalt-katalysierte Hydroformylierung in Gegenwart von Trialkyl- oder Triarylphosphinen ausgeführt, bilden sich als Hydroformylierungsprodukt direkt die gewünschten Heptanole, so dass keine weitere Hydrierung der Aldehydfunktion mehr benötigt wird.

Zur Kobalt-katalysierten Hydroformylierung des 1-Hexens bzw. der Hexenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Hexanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Hexanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 01014297 detailliert beschrieben.

Zur Rhodium-katalysierten Hydroformylierung des 1-Hexens bzw. der Hexenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Hexenisomerengemische, nicht-ligand-modifizierte Rhodiumcarbonylverbindungen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z. B. EP-A 695734, EP-B 880494 und EP-B 1047655 beschrieben.

Die nach Hydroformylierung der Hexen-Isomerengemische erhaltenen Isoheptanalgemische werden auf an sich herkömmliche Weise zu Isoheptanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z. B. in DE-A 3228881, DE-A 2628987 und DE-A 2445303 beschrieben. Besonders vorteilhaft wird die Hydrierung der Isoheptanale mit einem Überschuss an Wasserstoff von 1,5 bis 20 % über der stöchiometrisch zur Hydrierung der Isoheptanale benötigten Wasserstoffmenge, bei Temperaturen von 50 bis 200 °C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 01087809 zugefügt.

### Octanol

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Bd. A 10, S. 137 - 140, VCH Verlagsgesellschaft GmbH, Weinheim 1987).

Im Wesentlichen geradkettige Octanole können durch die Rhodium- oder vorzugsweise Kobalt-katalysierte Hydroformylierung von 1-Hepten und anschließende Hydrierung des erhaltenen n-Octanals zu n-Octanol erhalten werden. Das dazu benötigte 1-Hepten kann aus der Fischer-Tropsch-Synthese von Kohlenwasserstoffen gewonnen werden.

Bei dem Alkohol Isooctanol handelt es sich im Unterschied zu 2-Ethylhexanol oder n-Octanol, bedingt durch seine Herstellungsweise, nicht um eine einheitliche chemische Verbindung, sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können. Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den NickelkomplexKatalysator können z. B. Tributylphosphin, Tri-isopropylphosphin, Tricyclohexylphosphin und/oder Tribenzylphosphin eingesetzt werden. Die Umsetzung findet bei Temperaturen von 0 bis 80 °C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002).

Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im so genannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z. B. in WO 9514647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z. B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Das 1-Hepten und die Hepten-Isomerengemische werden nach den vorstehend in Zusammenhang mit der Herstellung von n-Heptanal und Heptanal-Isomerengemische erläuterten bekannten Verfahren mittels Rhodium- oder Kobalt-katalysierter Hydroformylierung, vorzugsweise Kobalt-katalysierter Hydroformylierung, in n-Octanal bzw. Octanal-Isomerengemische überführt. Diese werden anschließend z. B. mittels eines der vorstehend in Zusammenhang mit der n-Heptanol- und Isoheptanol-Herstellung genannten Katalysatoren zu den entsprechenden Octanolen hydriert.

### Nonanol

Im Wesentlichen geradkettiges Nonanol kann durch die rhodium- oder vorzugsweise kobaltkatalysierte Hydroformylierung von 1-Octen und nachfolgende Hydrierung des dabei erhaltenen n-Nonanals erhalten werden. Das Ausgangsolefin 1-Octen kann beispielsweise über eine Ethylenoligomerisierung mittels einem homogen im Reaktionsmedium - 1,4-Butandiol - löslichen Nickelkomplexkatalysator mit z. B. Diphenylphosphinoessigsäure oder 2-Diphenylphosphinobenzoesäure als Liganden erhalten werden. Dieses Verfahren ist auch unter der Bezeichnung Shell Higher Olefins Process oder SHOP-Verfahren bekannt (s. Weisermel, Arpe: Industrielle Organische Chemie; 5. Auflage; S. 96; Wiley-VCH, Weinheim 1998).

Bei Isononanol, welches zur Synthese der in der erfindungsgemäßen Weichmacher-Zusammensetzung enthaltenen Diisononylester der allgemeinen Formel (II) eingesetzt wird, handelt es sich nicht um eine einheitliche chemische Verbindung, sondern um ein Gemisch aus unterschiedlich verzweigten isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononanalgemische zu Isononanolgemischen hergestellt, wie in Ullmann's Encyclopedia of Industrial Chemistry, 5. Auflage, Bd. A1, S. 291 - 292, VCH Verlagsgesellschaft GmbH, Weinheim 1995, erläutert.

Als Ausgangsmaterial zur Herstellung der Isononanole können sowohl Isobuten, cis- und trans-2-Buten als auch 1-Buten oder Gemische dieser Butenisomere verwendet werden. Bei der vorwiegend mittels flüssiger, z. B. Schwefel- oder Phosphorsäure, oder fester, z. B. auf Kieselgur, SiO₂ oder Al₂O₃ als Trägermaterial aufgebrachter Phosphorsäure oder Zeolitheoder Brønsted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt sind Isononanole mit einem geringeren Verzweigungsgrad. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isooctens und Hydrierung der erhaltenen Isononanal-Gemische hergestellt. Ein bevorzugter Rohstoff ist das so genannte Raffinat II, das aus dem C₄-Schnitt eines Crackers, beispielsweise eines Steamcrackers, das nach Eliminierung von Allenen, Acetylenen und Dienen, insbesondere 1,3-Butadien, durch dessen Partialhydrierung zu linearen Butenen oder dessen Abtrennung durch Extraktivdestillation, beispielsweise mittels N-Methylpyrrolidon, und nachfolgender Brønsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren, wie sie im PolyGas®- oder EMOGASO-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 9514647 durchgeführt werden. Die dabei erhaltenen Isoocten-Gemische werden nach den vorstehend in Zusammenhang mit der Herstellung von Heptanal-Isomerengemische erläuterten bekannten Verfahren mittels Rhodium- oder Kobalt-katalysierter Hydroformylierung, vorzugsweise Kobalt-katalysierter Hydroformylierung, in Isononanal-Gemische überführt. Diese werden anschließend z. B. mittels einem der vorstehend in Zusammenhang mit der Isoheptanol-Herstellung genannten Katalysatoren zu den geeigneten Isononanolgemischen hydriert.

Die so hergestellten Isononanol-Isomerengemische können über ihren Isoindex charakterisiert werden, der aus dem Verzweigungsgrad der einzelnen isomeren Isononanolkomponenten im Isononanolgemisch multipliziert mit deren prozentualen Anteil im Isononanolgemisch errechnet werden kann. So tragen z. B. n-Nonanol mit dem Wert 0, Methyloctanole (eine Verzweigung) mit dem Wert 1 und Dimethylheptanole (zwei Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert. Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich, und es bedarf lediglich einiger weniger Routineversuche des Fachmanns, um aus dem vielfältigen Angebot des Handels ein optimal für diese Trennaufgabe geeignetes Fabrikat auszuwählen.

Die in der erfindungsgemäßen Weichmacher-Zusammensetzung verwendeten Diisononylester der allgemeinen Formel (II) sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanolgemischen angegeben, wie sie zur Herstellung der erfindungsgemäß eingesetzten Verbindungen der allgemeinen Formel (II) verwendet werden können, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 9514647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6-Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylen-haltigen Butengemisches als Rohstoff mittels des PolyGas®- oder EMOGASO-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
   mit der Maßgabe, dass sich die Gesamtsumme der genannten Komponenten 100 Gew.-% ergibt.

### Decanol

Bei Isodecanol, welches zur Synthese der in der erfindungsgemäßen Weichmacher-Zusammensetzung enthaltenen Diisodecylester der allgemeinen Formel (II) eingesetzt wird, handelt es sich nicht um eine einheitliche chemische Verbindung, sondern um ein komplexes Gemisch unterschiedlich verzweigter isomerer Decanole.

Diese werden im Allgemeinen durch die Nickel- oder Brønsted-Säure-katalysierte Trimerisierung von Propylen, beispielsweise nach dem vorstehend erläuterten PolyGas®- oder dem EMOGASO-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches, z. B. mittels der vorstehend in Zusammenhang mit der Herstellung von C₇-C₉-Alkoholen genannten Katalysatoren und Verfahren (Ullmann's Encyclopedia of Industrial Chemistry; 5. Auflage, Bd. A1, S. 293, VCH Verlagsgesellschaft GmbH, Weinheim 1985), hergestellt. Das so produzierte Isodecanol ist im Allgemeinen stark verzweigt.

Bei 2-Propylheptanol, welches zur Synthese der in der erfindungsgemäßen Weichmacher-Zusammensetzung enthaltenen Di(2-propylheptyl)ester der allgemeinen Formel (II) eingesetzt wird, kann es sich um reines 2-Propylheptanol handeln oder um Propylheptanol-Isomerengemische, wie sie im Allgemeinen bei der industriellen Herstellung von 2-Propylheptanol gebildet werden und gemeinhin ebenfalls als 2-Propylheptanol bezeichnet werden.

Reines 2-Propylheptanol kann durch Aldolkondensation von n-Valeraldehyd und nachfolgende Hydrierung des dabei gebildeten 2-Propylheptenals, beispielsweise gemäß US-A 2921089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-lsomeren 2-Propyl-4-methylhexanol, 2-Propyl-5-methylhexanol, 2-Isopropyl-heptanol, 2-Isopropyl-4-methylhexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethylhexanol im 2-Propylheptanol, ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Verbindungen praktisch keine Rolle.

Als Ausgangsmaterial zur Herstellung von 2-Propylheptanol können verschiedenerlei Kohlenwasserstoffquellen benutzt werden, beispielsweise 1-Buten, 2-Buten, Raffinat I-ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10 : 1 bis 20 : 1 gebildet, wohingegen bei Verwendung von mit Phosphit-Liganden, beispielsweise gemäß US-A 5288918 oder WO 05028407, oder von mit Phosphoamidit-Liganden, beispielsweise gemäß WO 0283695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d. h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäß eingesetzten Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366089, US-A 4426524 oder US-A 5434313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden.

Wie bereits erwähnt, können die in der erfindungsgemäßen Weichmacher-Zusammensetzung enthaltenen Verbindungen der allgemeinen Formel (II) mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung der Verbindungen der allgemeinen Formel (II) entspricht die Isomerenzusammensetzung der Alkylestergruppen bzw. Alkylethergruppen praktisch der Zusammensetzung der zur Veresterung verwendeten Propylheptanol-Isomerengemische.

### Undecanol

Die Undecanole, die zur Herstellung der in der erfindungsgemäßen Weichmacher-Zusammensetzung enthaltenen Verbindungen der allgemeinen Formel (II) eingesetzt werden, können geradkettig oder verzweigt sein oder aus Gemischen geradkettiger und verzweigter Undecanole zusammengesetzt sein. Bevorzugt werden Gemische aus verzweigten Undecanolen, auch als Isoundecanol bezeichnet, als Alkoholkomponente verwendet.

Im Wesentlichen geradkettiges Undecanol kann durch die Rhodium- oder vorzugsweise Kobalt-katalysierte Hydroformylierung von 1-Decen und nachfolgende Hydrierung des dabei erhaltenen n-Undecanals erhalten werden. Das Ausgangsolefin 1-Decen wird über das zuvor bei der Herstellung von 1-Octen erwähnte SHOP-Verfahren hergestellt.

Zur Herstellung verzweigten Isoundecanols kann das im SHOP-Verfahren erhaltene 1-Decen einer Skelettisomerisierung, z. B. mittels acider zeolithischer Molekularsiebe, wie in WO 9823566 beschrieben, unterzogen werden, wobei sich Gemische aus isomeren Decenen bilden, deren Rhodium- oder vorzugsweise Kobalt-katalysierte Hydroformylierung und nachfolgende Hydrierung der erhaltenen Isoundecanal-Gemische zu dem zur Herstellung der erfindungsgemäß eingesetzten Verbindungen (II) verwendeten Isoundecanols führt. Die Hydroformylierung von 1-Decen oder Isodecen-Gemischen mittels Rhodium- oder Kobalt-Katalyse kann wie zuvor in Zusammenhang mit der Synthese von C₇- bis C₁₀-Alkoholen beschrieben erfolgen. Entsprechendes gilt für die Hydrierung von n-Undecanal oder Isoundecanal-Gemischen zu n-Undecanol bzw. Isoundecanol.

Nach destillativer Reinigung des Austrags der Hydrierung können die so erhaltenen C₇-bis C₁₁-Alkylalkohole bzw. deren Gemische, wie vorstehend beschrieben, zur Herstellung der erfindungsgemäß eingesetzten Diesterverbindungen der allgemeinen Formel (II) verwendet werden.

### Dodecanol

Im Wesentlichen geradkettiges Dodecanol kann in vorteilhafter Weise über das Alfol®- oder Epal®-Verfahren gewonnen werden. Diese Verfahren beinhalten die Oxidation und Hydrolyse geradkettiger Trialkylaluminium-Verbindungen, welche ausgehend von Triethylaluminium schrittweise über mehrere Ethylierungsreaktionen unter Verwendung von Ziegler-Natta-Katalysatoren aufgebaut werden. Aus den daraus resultierenden Gemischen weitgehend geradkettiger Alkylalkohole unterschiedlicher Kettenlänge kann nach dem destillativen Austrag der C₁₂-Alkylalkohol-Fraktion das gewünschte n-Dodecanol erhalten werden.

Alternativ kann n-Dodecanol auch durch Hydrogenierung natürlicher Fettsäuremethylester, beispielsweise aus Kokosnussöl, hergestellt werden.

Verzweigtes Isododecanol kann analog zu den bekannten Verfahren zur Codimerisierung und/oder Oligomerisierung von Olefinen, wie beispielsweise in der WO 0063151 beschrieben, mit nachfolgender Hydroformylierung und Hydrierung der Isoundecen-Gemische, wie beispielsweise in der DE-A 4339713 beschrieben, erhalten werden. Nach destillativer Reinigung des Austrags der Hydrierung können die so erhaltenen Isododecanole bzw. deren Gemische, wie vorstehend beschrieben, zur Herstellung der erfindungsgemäß eingesetzten Diesterverbindungen der allgemeinen Formel (II) verwendet werden.

### Plastisolanwendungen

Wie bereits dargelegt eignet sich die erfindungsgemäße Weichmacher-Zusammensetzung aufgrund ihrer guten Geliereigenschaften insbesondere zur Herstellung von Plastisolen.

Ein weiterer Gegenstand der Erfindung betrifft daher die Verwendung einer Weichmacher-Zusammensetzung, wie zuvor definiert, als Weichmacher in einem Plastisol.

Plastisole können aus verschiedenen Kunststoffen hergestellt werden. Bei den erfindungsgemäßen Plastisolen handelt es sich in einer bevorzugten Ausführungsform um ein PVC-Plastisol.

Der Anteil an erfindungsgemäßer Weichmacher-Zusammensetzung in den PVC-Plastisolen beträgt üblicherweise 5 bis 300 phr, bevorzugt 50 bis 200 phr.

Plastisole werden üblicherweise bei Umgebungstemperatur durch verschiedene Verfahren, wie Streichverfahren, Siebdruckverfahren, Gießverfahren, wie das Schalengieß- oder Rotationsgießverfahren, Tauchverfahren, Spritzverfahren und dergleichen in die Form des fertigen Produkts gebracht. Anschließend erfolgt durch Erwärmung die Gelierung, wobei nach Abkühlung ein homogenes, mehr oder weniger flexibles Produkt erhalten wird.

PVC-Plastisole eignen sich insbesondere zur Herstellung für PVC-Folien, für die Herstellung von nahtlosen Hohlkörpern, Handschuhen und zur Anwendung im Textilbereich, wie z. B. für Textilbeschichtungen.

Speziell eignen sich die PVC-Plastisole auf Basis der erfindungsgemäßen Weichmacher-Zusammensetzung zur Produktion von künstlichem Leder, z.B. von künstliches Leder für den Kraftfahrzeugbau; Unterbodenschutz für Kraftfahrzeuge; Nahtabdichtungen; Teppichrückseitenbeschichtungen; schwere Beschichtungen; Förderbänder; Tauchbeschichtungen und mittels Tauchverfahren hergestellte Artikel; Spielzeug, wie Puppen, Bälle oder Spielzeugtiere; anatomische Modelle für die Ausbildung; Bodenbeläge; Wandbeläge; (beschichtete) Textilien, wie Latex-Kleidung, Schutzbekleidung oder Regenkleidung, wie Regenjacken; Planen; Zelte; Bandbeschichtungen; Dachbahnen; Dichtungsmassen für Verschlüsse; Atemmasken und Handschuhe.

### Anwendungen Formmasse

Die erfindungsgemäße Formmasse wird bevorzugt für die Herstellung von Formkörpern und Folien verwendet. Dazu gehören insbesondere Gehäuse von Elektrogeräten, wie beispielsweise Küchengeräten und Computergehäuse; Werkzeuge; Apparate; Rohrleitungen; Kabel; Schläuche, wie beispielsweise Kunststoffschläuche, Wasser- und Bewässerungsschläuche, Industrie-Gummischläuche oder Chemieschläuche; Draht-Ummantelungen; Fensterprofile; Komponenten für den Fahrzeugbau, wie beispielsweise Karosseriebestandteile, Vibrationsdämpfer für Motoren; Reifen; Möbel, wie beispielsweise Stühle, Tische oder Regale; Schaumstoff für Polster und Matratzen; Dichtungen; Verbundfolien, wie Folien für Verbundsicherheitsglas, insbesondere für Fahrzeug- und Fensterscheiben; Schallplatten; Verpackungsbehälter; Klebebandfolien oder Beschichtungen.

Daneben eignet sich die erfindungsgemäße Formmasse zusätzlich für die Herstellung von Formkörpern und Folien, die direkt mit Menschen oder Nahrungsmitteln in Kontakt kommen. Dabei handelt es sich vorwiegend um Medizinprodukte, Hygieneprodukte, Lebensmittelverpackungen, Produkte für den Innenraumbereich, Spielzeug und Kinderpflegeartikel, Sport- und Freizeitprodukte, Bekleidung oder Fasern für Gewebe und dergleichen.

Bei den Medizinprodukten, die aus der erfindungsgemäßen Formmasse hergestellt werden können, handelt es sich beispielsweise um Schläuche für enterale Ernährung und Hämodialyse, Beatmungsschläuche, Infusionsschläuche, Infusionsbeutel, Blutbeutel, Katheter, Trachealtuben, Einmalspritzen, Handschuhe oder Atemmasken.

Bei den Lebensmittelverpackungen, die aus der erfindungsgemäßen Formmasse hergestellt werden können, handelt es sich beispielsweise um Frischhaltefolien, Lebensmittelschläuche, Trinkwasserschläuche, Behälter zur Aufbewahrung oder zum Einfrieren von Lebensmitteln, Deckeldichtungen, Verschlusskappen, Kronkorken oder künstliche Weinkorken.

Bei den Produkten für den Innenraumbereich, die aus der erfindungsgemäßen Formmasse hergestellt werden können, handelt es sich beispielsweise um Bodenbeläge, welche homogen oder aus mehreren Schichten, bestehend aus mindestens einer geschäumten Schicht, aufgebaut sein können, wie beispielsweise Fußbodenbeläge, Sportböden oder Luxury Vinyl Tiles (LVT), Kunstleder, Wandbeläge oder geschäumte oder nicht geschäumte Tapeten in Gebäuden oder um Verkleidungen oder Konsolenabdeckungen in Fahrzeugen.

Bei den Spielzeugen und Kinderpflegeartikeln, die aus der erfindungsgemäßen Formmasse hergestellt werden können, handelt es sich beispielsweise um Puppen, aufblasbares Spielzeug wie Bälle, Spielfiguren, Knete, Schwimmhilfen, Kinderwagen-Abdeckhauben, Wickelauflagen, Wärmflaschen, Beißringe oder Fläschchen.

Bei den Sport und Freizeitprodukten, die aus der erfindungsgemäßen Formmasse hergestellt werden können, handelt es sich beispielsweise um Gymnastikbälle, Übungsmatten, Sitzkissen, Massagebälle und -rollen, Schuhe bzw. Schuhsohlen, Bälle, Luftmatratzen oder Trinkflaschen.

Bei der Bekleidung, die aus den erfindungsgemäßen Formmassen hergestellt werden können, handelt es sich beispielsweise um Gummistiefel.

### Nicht-PVC-Anwendungen

Daneben beinhaltet die vorliegende Erfindung die Verwendung der erfindungsgemäßen Weichmacher-Zusammensetzung als Hilfsmittel oder/und in Hilfsmitteln, ausgewählt unter: Kalandrierhilfsmitteln; Rheologiehilfsmitteln; oberflächenaktive Zusammensetzungen wie Fließ-, Filmbildehilfen, Entschäumern, Schaumverhütern, Benetzungsmitteln, Koaleszenzmitteln und Emulgatoren; Schmierstoffen, wie Schmierölen, Schmierfetten und Schmierpasten; Quenchern für chemische Reaktionen; Phlegmatisierungsmitteln; pharmazeutischen Produkten; Weichmachern in Klebstoffen; Schlagzähmodifizierern und Stellmitteln.

Die Erfindung wird anhand der im Folgenden beschriebenen Figuren und der Beispiele näher erläutert. Dabei sollen die Figuren und Beispiele nicht als einschränkend für die Erfindung verstanden werden.

In den nachfolgenden Beispielen und Figuren werden folgende Abkürzungen verwendet:
2,5-FDCS für 2,5-Furandicarbonsäure,
DINP für Diisononylphthalat,
DMAP für 4-Dimethylaminopyridin,
THF für Tetrahydrofuran,
phr für Gewichtsteile pro 100 Gewichtsteile Polymer.

### FIGURENBESCHREIBUNG

### Figur 1:

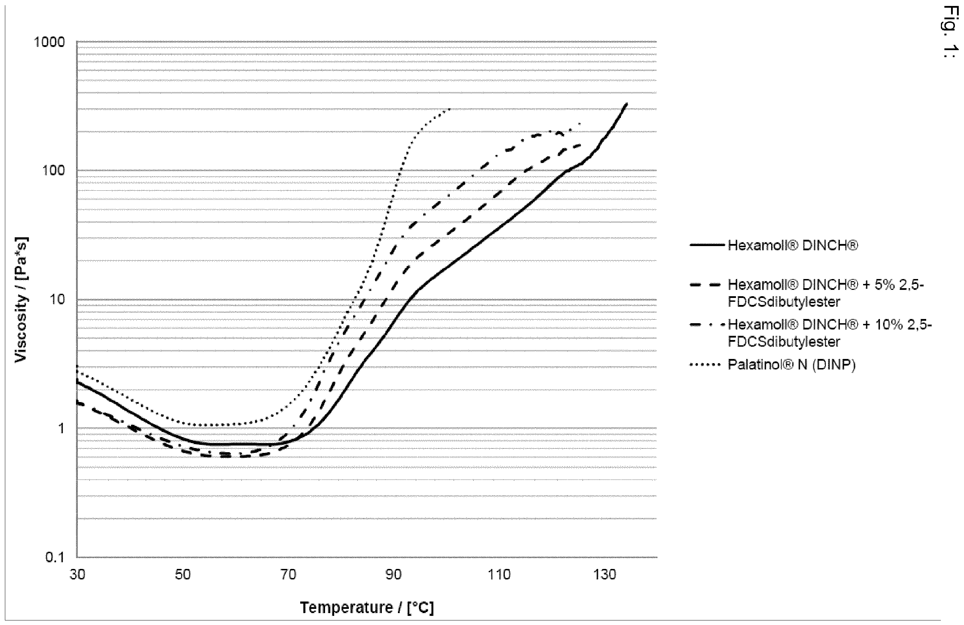

Figur 1 zeigt das Gelierverhalten von PVC-Plastisolen mit einem Gesamtanteil an erfindungsgemäßer Weichmacher-Zusammensetzung von jeweils 60 phr. Dabei wurden erfindungsgemäße Weichmacher-Zusammensetzungen verwendet, die den kommerziell erhältlichen Weichmacher Hexamoll® DINCH® und unterschiedliche Mengen des Schnellgelierers 2,5-FDCS-dibutylester enthalten. Zusätzlich ist als Vergleich das Gelierverhalten von PVC-Plastisolen dargestellt, die ausschließlich die kommerziell erhältlichen Weichmacher Hexamoll® DINCH® oder Palatinol® N (DINP) enthalten. Dargestellt ist die Viskosität der Plastisole in Abhängigkeit der Temperatur.

### BEISPIELE

### I) Herstellungsbeispiele erfindungsgemäß eingesetzter Verbindungen (I):

### Beispiel 1

### Synthese von Di-(n-butyl)-2,5-furandicarboxylat durch direkte Veresterung

In einem 2 L Rundhalskolben, ausgestattet mit einem Dean-Stark Wasserabscheider und einem Tropftrichter mit Druckausgleich, wurden 445 g (6,00 mol, 4,0 Äquivalente) n-Butanol in 500 g Toluol vorgelegt. Die Mischung wurde unter Rühren bis zum Rückfluss erhitzt und 234 g (1,50 mol, 1,0 Äquivalente) 2,5-Furandicarbonsäure gefolgt von 11,5 g (0,12 mol, 8 mol-%) 99,9%iger Schwefelsäure in 3 bis 4 Portionen zugegeben, wann immer sich die Umsetzung verlangsamte. Der Reaktionsverlauf wurde anhand der Menge an abgeschiedenem Wasser in der Dean-Stark-Apparatur verfolgt. Nach vollständigem Umsatz wurde dem Reaktionsgemisch eine Probe entnommen und mittels GC analysiert. Die Reaktionsmischung wurde auf Raumtemperatur abgekühlt, in einen Scheidetrichter überführt und zweimal mit gesättigter NaHCO₃-Lösung gewaschen. Die organische Phase wurde mit gesättigter Kochsalzlösung gewaschen, mit wasserfreiem Na₂SO₄ getrocknet und das Lösungsmittel unter reduziertem Druck entfernt. Das Rohprodukt wurde mittels fraktionierter Destillation gereinigt. Das gewünschte Di-(n-butyl)-2,5-furandicarboxylat konnte dabei in einer Ausbeute von 80 % und einer Reinheit von 98,9 % erhalten werden. Die Identität und Reinheit des finalen Produktes wurde mittels NMR- und GC-MS-Analyse ermittelt (GC-Trennsäule: Agilent J&W DB-5, 30 m x 0,32 mm x 1,0 µm oder Ohio Valley OV-1701 60 m x 0,32 mm x 0,25 µm).

### II) Anwendungstechnische Prüfungen:

### II.a) Bestimmung der Lösetemperatur nach DIN 53408:

Zur Charakterisierung des Gelierverhaltens der erfindungsgemäß eingesetzten Verbindungen (I) in PVC wurde die Lösetemperatur nach DIN 53408 bestimmt. Nach DIN 53408 wird ein Tropfen einer Aufschlämmung von 1 g PVC in 19 g Weichmacher unter einem mit einem heizbaren Mikroskoptisch ausgestatteten Mikroskop im durchscheinenden Licht beobachtet. Die Temperatur wird dabei ab 60 °C linear um 2 °C pro Minute erhöht. Als Lösetemperatur gilt die Temperatur, bei welcher die PVC-Teilchen unsichtbar werden, d. h. deren Konturen und Kontraste nicht mehr zu erkennen sind. Je niedriger die Lösetemperatur, desto besser ist das Gelierverhalten der betreffenden Substanz für PVC.

In der nachfolgenden Tabelle sind die Lösetemperaturen des Weichmachers Di(n-butyl)-2,5-furandicarboxylat und als Vergleich von Mesamoll® TP-LXS 5106 sowie von Dibutylphthalat aufgeführt.

| Bsp.-Nr. | Substanz | Lösetemperatur nach DIN 53408 |
|---|---|---|
| | | [°C] |
| 1 | Di(n-butyl)-2,5-furandicarboxylat | 83 |
| V1 | Mesamoll® TP-LXS 51067¹⁾ | 114 |
| V2 | Dibutylphthalat²⁾ | 100 |

| | | |
|---|---|---|
| 1) Mischung von Alkylsulfonsäurephenylestern der Lanxess Deutschland GmbH (CAS Nr. 91082-17-6) 2) Benzol-1,2-dicarbonsäure-di(n-butyl)ester (CAS Nr. 84-74-2) | | |

Wie aus der Tabelle ersichtlich, zeigt Di(n-butyl)-2,5-furandicarboxylat die niedrigste Lösetemperatur.

### II.b) Bestimmung des Gelierverhaltens von PVC-Plastisolen:

Zur Untersuchung des Gelierverhaltens von PVC-Plastisolen auf Basis der erfindungsgemäßen Weichmacher-Zusammensetzungen wurden PVC-Plastisole, die den kommerziell erhältlichen Weichmacher Hexamoll® DINCH® und unterschiedliche Mengen des Schnellgelierers 2,5-FDCS-dibutylester (5 bis10 Gew.-%, bezogen auf die eingesetzte Weichmacher-Zusammensetzung) enthalten, nach folgender Rezeptur hergestellt:

| Additiv | phr |
|---|---|
| Solvin 372 NF³⁾ | 100 |
| Erfindungsgemäße Weichmacher-Zusammensetzung | 60 |
| Reagens SLX 781⁴⁾ | 2 |

| | |
|---|---|
| 3) kommerziell erhältliches PVC der Firma Solvin GmbH & Co. KG, hergestellt durch Suspensionspolymerisation (K-Wert nach ISO 1628-2: 73) 4) flüssiger Ba-Zn-Stabilisator der Firma Reagens Deutschland GmbH | |

Als Vergleich wurden zudem Plastisole hergestellt, die ausschließlich die kommerziell erhältlichen Weichmacher Hexamoll® DINCH® oder Palatinol® N (DINP) enthalten.

Die Herstellung der Plastisole erfolgte in der Weise, dass zu der eingewogenen Mischung aus der erfindungsgemäßen Weichmacher-Zusammensetzung und Thermostabilisator unter Rühren mittels Dissolver bei ca. 800 Umdrehungen/Minute das PVC zugegeben wurde. Nach Beendigung der PVC-Zugabe wurde die Mischung für 2,5 Minuten bei 2500 Umdrehungen/Minute homogenisiert und anschließend in einem Exsikkator unter Vakuum entlüftet.

Um ein flüssiges PVC-Plastisol zu gelieren und vom Zustand homogen in Weichmacher dispergierter PVC-Partikel in eine homogene, feste Weich-PVC-Matrix zu überführen, muss die dafür notwendige Energie in Form von Wärme zugeführt werden. In einem Verarbeitungsprozess stehen dafür die Parameter Temperatur und Verweilzeit zur Verfügung. Je schneller die Gelierung abläuft (Indiz ist hier die Lösetemperatur, d. h. je niedriger diese ist, desto schnelle geliert das Material), umso geringer kann die Temperatur (bei gleicher Verweilzeit) oder die Verweilzeit (bei gleicher Temperatur) gewählt werden.

Die Untersuchung des Gelierverhaltens eines Plastisols erfolgt nach interner Methode mit einem Rheometer MCR101 der Firma Anton Paar. Gemessen wird hierbei die Viskosität der Paste unter Aufheizen bei konstanter Scherung (Rotation). Die Messung erfolgt mit einem Platte/Platte-System (PP50) beginnend bei 30 °C unter einer Scherrate von 10 1/s und einer Aufheizrate von 5 °C/Minute.

Im Allgemeinen nimmt die Viskosität eines Plastisols mit steigender Temperatur zunächst ab und erreicht ein Minimum. Anschließend steigt die Viskosität wieder an. Die Temperatur am Minimum der Kurve und die Steilheit des Anstiegs nach dem Minimum geben Hinweise auf das Gelierverhalten, d. h. je niedriger die Temperatur am Minimum und je steiler der anschließende Anstieg, desto besser bzw. schneller erfolgt die Gelierung.

Wie in der Figur 1 sehr gut zu erkennen ist, geliert das PVC-Plastisol mit der erfindungsgemäßen Weichmacher-Zusammensetzung im Vergleich zu dem PVC-Plastisol, welches ausschließlich den kommerziell erhältlichen Weichmacher Hexamoll® DINCH® enthält, deutlich schneller und bei wesentlich niedrigeren Temperaturen. Des Weiteren weisen die PVC-Plastisole, welche die erfindungsgemäße Weichmacher-Zusammensetzung enthalten, im ungelierten Zustand, d. h. bei Temperaturen unterhalb der Geliertemperatur, eine deutlich geringere Viskosität auf als ein PVC-Plastisol, welches ausschließlich den kommerziell erhältlichen Weichmacher Palatinol® N (DINP) enthält.

## Patentansprüche

1. Weichmacher-Zusammensetzung, enthaltend
a) wenigstens eine Verbindung der allgemeinen Formel (I), 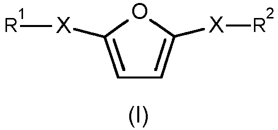 worin
X für ∗-(C=O)-O-, ∗-(CH₂)ₙ-O- oder ∗-(CH₂)ₙ-O-(C=O)- steht, wobei ∗ den Verknüpfungspunkt mit dem Furanring darstellt und n den Wert 0, 1 oder 2 aufweist;
und
R¹ und R² unabhängig voneinander für einen unverzweigten oder verzweigten C₄-Alkylrest stehen,
b) wenigstens eine Verbindung der allgemeinen Formel (II), 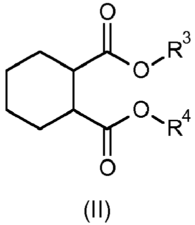 worin
R³ und R⁴ unabhängig voneinander ausgewählt sind unter verzweigten und unverzweigten C₇-C₁₂-Alkylresten,
wobei der Gehalt an Verbindungen der allgemeinen Formel (I) in der Weichmacher-Zusammensetzung 1 bis 50 Gew.-% beträgt.

2. Weichmacher-Zusammensetzung nach einem der vorangehenden Ansprüche, wobei in den Verbindungen der allgemeinen Formel (I) R¹ und R² beide für n-Butyl oder beide für Isobutyl stehen.

3. Weichmacher-Zusammensetzung nach einem der vorangehenden Ansprüche, wobei in den Verbindungen der allgemeinen Formel (I) die Gruppe X beide für ∗-(C=O)-O- steht.

4. Weichmacher-Zusammensetzung nach einem der vorangehenden Ansprüche, wobei in den Verbindungen der allgemeinen Formel (II) R³ und R⁴ beide für 2-Ethylhexyl, beide für Isononyl oder beide für 2-Propylheptyl stehen.

5. Weichmacher-Zusammensetzung nach einem der vorangehenden Ansprüche, wobei die Weichmacher-Zusammensetzung gegebenenfalls einen weiteren von den Verbindungen (I) und (II) verschiedenen Weichmacher enthält, der ausgewählt ist unter Phthalsäuredialkylestern, Phthalsäurealkylaralkylestern, von Verbindungen (II) verschiedenen 1,2-Cyclohexandicarbonsäureestern, Terephthalsäuredialkylestern, Trimellitsäuretrialkylestern, Benzoesäurealkylestern, Dibenzoesäureestern von Glycolen, Hydroxybenzoesäureestern, Estern von gesättigten Mono- und Dicarbonsäuren, Estern von ungesättigten Dicarbonsäuren, Amiden und Estern von aromatischen Sulfonsäuren, Alkylsulfonsäureestern, Glycerinestern, Isosorbidestern, Phosphorsäureestern, Citronensäuretriestern, Alkylpyrrolidonderivaten, von Verbindungen (I) verschiedenen 2,5-Furandicarbonsäureestern, 2,5-Tetrahydrofurandicarbonsäureestern, epoxidierten Pflanzenölen und epoxidierten Fettsäuremonoalkylestern, Polyestern aus aliphatischen und/oder aromatischen Polycarbonsäuren mit wenigstens zweiwertigen Alkoholen.

6. Weichmacher-Zusammensetzung nach einem der vorangehenden Ansprüche, wobei der Gehalt an Verbindungen der allgemeinen Formel (II) in der Weichmacher-Zusammensetzung 10 bis 99 Gew.-% beträgt.

7. Weichmacher-Zusammensetzung nach einem der vorangehenden Ansprüche, wobei das Gewichtsverhältnis zwischen Verbindungen der allgemeinen Formel (I) und Verbindungen der allgemeinen Formel (II) im Bereich von 1 : 100 bis 1 : 1 liegt.

8. Formmasse, enthaltend wenigstens ein Polymer und eine Weichmacher-Zusammensetzung wie in einem der Ansprüche 1 bis 7 definiert.

9. Formmasse nach Anspruch 8, wobei es sich bei dem Polymer um ein thermoplastisches Polymer handelt, das ausgewählt ist unter
- Homo- oder Copolymeren, die wenigstens ein Monomer einpolymerisiert enthalten, das ausgewählt ist unter C₂-C₁₀-Monoolefinen, 1,3-Butadien, 2-Chlor-1,3-butadien, Vinylalkohol und dessen C₂-C₁₀-Alkylestern, Vinylchlorid, Vinylidenchlorid, Vinylidenfluorid, Tetrafluorethylen, Glycidylacrylat, Glycidylmethacrylat, Acrylaten und Methacrylaten von C₁-C₁₀-Alkoholen, Vinylaromaten, (Meth)acrylnitril, Maleinsäureanhydrid und α,β-ethylenisch ungesättigten Mono- und Dicarbonsäuren,
- Homo- und Copolymeren von Vinylacetalen,
- Polyvinylestern,
- Polycarbonaten,
- Polyestern,
- Polyethern,
- Polyetherketonen,
- thermoplastischen Polyurethanen,
- Polysulfiden,
- Polysulfonen,
- Polyethersulfonen,
- Cellulosealkylestern,
und Mischungen davon.

10. Formmasse nach Anspruch 9, wobei das thermoplastische Polymer ausgewählt ist unter Polyvinylchlorid (PVC), Polyvinylbutyral (PVB), Homo- und Copolymeren von Vinylacetat, Homo- und Copolymeren von Styrol, Polyacrylate, thermoplastischen Polyurethanen (TPU) oder Polysulfiden.

11. Formmasse nach einem der Ansprüche 9 oder 10, wobei es sich bei dem thermoplastischen Polymer um Polyvinylchlorid (PVC) handelt.

12. Formmasse nach Anspruch 11, wobei der Gehalt der Weichmacher-Zusammensetzung in der Formmasse 1,0 bis 300 phr beträgt.

13. Formmasse nach einem der Ansprüche 9 oder 10, enthaltend wenigstens ein von Polyvinylchlorid verschiedenes thermoplastisches Polymer, wobei der Gehalt der Weichmacher-Zusammensetzung in der Formmasse 0,5 bis 300 phr beträgt.

14. Formmasse nach Anspruch 8, wobei es sich bei dem Polymer um ein Elastomer handelt, bevorzugt ausgewählt unter natürlichen Kautschuken, synthetischen Kautschuken und Mischungen davon.

15. Formmasse nach Anspruch 14, wobei der Gehalt der Weichmacher-Zusammensetzung in der Formmasse 1,0 bis 60 phr beträgt.

16. Verwendung einer Weichmacher-Zusammensetzung, wie in einem der Ansprüche 1 bis 7 definiert, als Weichmacher für thermoplastische Polymere und Elastomere.

17. Verwendung einer Weichmacher-Zusammensetzung, wie in einem der Ansprüche 1 bis 7 definiert, als Weichmacher in einem Plastisol.

18. Verwendung einer Formmasse, wie in einem der Ansprüche 8 bis 15 definiert, zur Herstellung von Formkörpern und Folien, wie beispielsweise Gehäusen von Elektrogeräten, Computergehäusen, Werkzeugen, Rohrleitungen, Kabeln, Schläuchen, Draht-Ummantelungen, Fensterprofilen, Komponenten für den Fahrzeugbau, Reifen, Möbeln, Schaumstoff für Polster und Matratzen, Planen, Dichtungen, Verbundfolien, Schallplatten, Kunstleder, Verpackungsbehältern, Klebebandfolien oder Beschichtungen.

19. Verwendung einer Formmasse, wie in einem der Ansprüche 8 bis 15 definiert, zur Herstellung von Formkörpern und Folien, die direkt mit Menschen oder Nahrungsmitteln in Kontakt kommen.

20. Verwendung wie in Anspruch 19 definiert, wobei es sich bei den Formkörpern und Folien, die direkt mit Menschen oder Nahrungsmitteln in Kontakt kommen, um Medizinprodukte, Hygieneprodukte, Lebensmittelverpackungen, Produkte für den Innenraumbereich, Spielzeuge und Kinderpflegeartikel, Sport- und Freizeitprodukte, Bekleidung oder Fasern für Gewebe handelt.

## Claims

1. A plasticizer composition, comprising
a) at least one compound of the general formula (I), 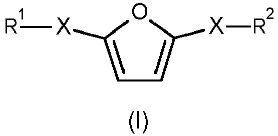 wherein
X is ∗-(C=O)-O-, ∗-(CH₂)ₙ-O- or ∗-(CH₂)ₙ-O-(C=O)-, wherein ∗ represents the linkage point with the furan ring and n has the value 0, 1 or 2;
and
R¹ and R² are mutually independently an unbranched or branched C₄ alkyl residue,
b) at least one compound of the general formula (II), 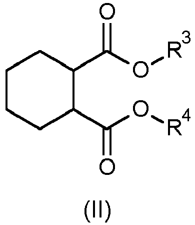 wherein
R³ and R⁴ are mutually independently selected from branched and unbranched C₇-C₁₂ alkyl residues,
where the content of the compounds of the general formula (I) in the plasticizer composition is 1 to 50 wt.%.

2. The plasticizer composition according to any one of the preceding claims, where in the compounds of the general formula (I) R¹ and R² both are n-butyl or both are isobutyl.

3. The plasticizer composition according to any one of the preceding claims, where in the compounds of the general formula (I) the group X is ∗-(C=O)-O-.

4. The plasticizer composition according to any one of the preceding claims, where in the compounds of the general formula (II) R³ and R⁴ both are 2-ethylhexyl, both are isononyl or both are 2-propylheptyl.

5. The plasticizer composition according to any one of the preceding claims, where the plasticizer composition optionally comprises a further plasticizer different from the compounds (I) and (II), which is selected from dialkyl phthalate esters, alkyl aralkyl phthalate esters, 1,2-cyclohexanedicarboxylate esters different from compounds (II), dialkyl terephthalate esters, trialkyl trimellitate esters, alkyl benzoate esters, dibenzoate esters of glycols, hydroxybenzoate esters, esters of saturated mono- and dicarboxylic acids, esters of unsaturated dicarboxylic acids, amides and esters of aromatic sulfonic acids, alkylsulfonate esters, glycerin esters, isosorbide esters, phosphate esters, citric acid triesters, alkylpyrrolidone derivatives, 2,5-furandicarboxylate esters different from compounds (I), 2,5-tetrahydrofurandicarboxylate esters, epoxidized plant oils and epoxidized fatty acid monoalkyl esters, and polyesters of aliphatic and/or aromatic polycarboxylic acids with at least dihydric alcohols.

6. The plasticizer composition according to any one of the preceding claims, where the content of the compounds of the general formula (II) in the plasticizer composition is 10 to 99 wt.%.

7. The plasticizer composition according to any one of the preceding claims, where the weight ratio between compounds of the general formula (I) and compounds of the general formula (II) is in the range from 1:100 to 1:1.

8. A molding compound, comprising at least one polymer and one plasticizer composition as defined in any one of claims 1 to 7.

9. The molding compound according to claim 8, where the polymer is a thermoplastic polymer which is selected from
- homo- or copolymers which comprise at least monomer incorporated by polymerization, which is selected from C₂-C₁₀ monoolefins, 1,3-butadiene, 2-chloro-1,3-butadiene, vinyl alcohol and C₂-C₁₀ alkyl esters thereof, vinyl chloride , vinylidene chloride, vinylidene fluoride, tetrafluoroethylene, glycidyl acrylate, glycidyl methacrylate, acrylates and methacrylates of C₁-C₁₀ alcohols, vinylaromatics (meth)acrylonitrile, maleic anhydride and · · · -ethylenically unsaturated mono- and dicarboxylic acids,
- homo- and copolymers of vinyl acetals,
- polyvinyl esters,
- polycarbonates,
- polyesters,
- polyethers,
- polyether ketones,
- thermoplastic polyurethanes,
- polysulfides,
- polysulfones,
- polyether sulfones,
- cellulose alkyl esters,
and mixtures thereof.

10. The molding compound according to claim 9, wherein the thermoplastic polymer is selected from polyvinyl chloride (PVC), polyvinyl butyral (PVB), homo- and copolymers of vinyl acetate, homo- and copolymers of styrene, polyacrylates, thermoplastic polyurethanes (TPU) or polysulfides.

11. The molding compound according to any one of claims 9 or 10, where the thermoplastic polymer is polyvinyl chloride (PVC).

12. The molding compound according to claim 11, where the content of the plasticizer composition in the molding compound is 1.0 to 300 phr.

13. The molding compound according to one of claims 9 or 10, comprising at least one thermoplastic polymer different from polyvinyl chloride, where the content of the plasticizer composition in the molding compound is 0.5 to 300 phr.

14. The molding compound according to claim 8, where the polymer is an elastomer, preferably selected from natural rubbers, synthetic rubbers and mixtures thereof.

15. The molding compound according to claim 14, wherein the content of the plasticizer composition in the molding compound is 1.0 to 60 phr.

16. The use of a plasticizer composition, as defined in any one of claims 1 to 7, as a plasticizer for thermoplastic polymers and elastomers.

17. The use of a plasticizer composition, as defined in any one of claims 1 to 7, as a plasticizer in a plastisol.

18. The use of a molding compound, as defined in any one of claims 8 to 15, for the production of molded articles and films, such as for example housings of electrical devices, computer housings, tools, pipes, cables, hoses, wire coverings, window profiles, components for automobile construction, tires, furniture, foam for pillows and mattresses, tarpaulins, seals, laminated films, records, artificial leather, packing containers, adhesive tape films or coatings.

19. The use of a molding compound as defined in any one of claims 8 to 15, for the production of molded articles and films which come directly into contact with people or foods.

20. The use as defined in claim 19, where the molded articles and films which come directly into contact with people or foods are medicinal products, hygiene products, food packaging, products for interiors, toys and childcare articles, sport and leisure products, clothing or fibers for fabrics.

## Revendications

1. Composition de plastifiant contenant
a) au moins un composé de formule générale (I) 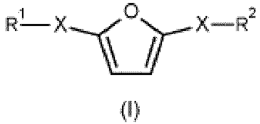 dans laquelle
X représente *-(C=O)-O-, *-(CH₂)ₙ-O- ou *-(CH₂)ₙ-O-(C=O)-, * représentant le point de liaison avec le cycle furanne et n présentant la valeur 0, 1 ou 2 ;
et
R¹ et R² représentent, indépendamment l'un de l'autre, un radical C₄-alkyle non ramifié ou ramifié,
b) au moins un composé de formule générale (II) 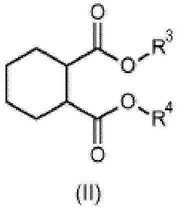 dans laquelle
R³ et R⁴ sont choisis, indépendamment l'un de l'autre, parmi les radicaux C₇-C₁₂-alkyle ramifiés et non ramifiés,
la teneur en composés de formule générale (I) dans la composition de plastifiant représentant 1 à 50% en poids.

2. Composition de plastifiant selon l'une quelconque des revendications précédentes, R¹ et R² dans les composés de formule générale (I) représentant tous les deux n-butyle ou tous les deux isobutyle.

3. Composition de plastifiant selon l'une quelconque des revendications précédentes, les groupes X dans les composés de formule générale (I) représentant tous les deux *-(C=O)-O-.

4. Composition de plastifiant selon l'une quelconque des revendications précédentes, R³ et R⁴ dans les composés de formule générale (II) représentant tous les deux 2-éthylhexyle, tous les deux isononyle ou tous les deux 2-propylheptyle.

5. Composition de plastifiant selon l'une quelconque des revendications précédentes, la composition de plastifiant contenant le cas échéant un autre plastifiant différent des composés (I) et (II), qui est choisi parmi les esters dialkyliques de l'acide phtalique, les esters aralkyliques de l'acide phtalique, les esters de l'acide 1,2-cyclohexanedicarboxylique différents des composés (II), les esters dialkyliques de l'acide téréphtalique, les esters trialkyliques de l'acide trimellitique, les esters alkyliques de l'acide benzoïque, les esters de glycols de l'acide dibenzoïque, les esters de l'acide hydroxybenzoïque, les esters d'acides monocarboxyliques et dicarboxyliques saturés, les esters d'acides dicarboxyliques insaturés, les amides et les esters d'acides sulfoniques aromatiques, les esters d'acides alkylsulfoniques, les esters de glycérol, les esters d'isosorbide, les esters de l'acide phosphorique, les triesters de l'acide citrique, les dérivés d'alkylpyrrolidone, les esters de l'acide 2,5-furannedicarboxylique différents des composés (I), les esters de l'acide 2,5-tétrahydrofurannedicarboxylique, les huiles végétales époxydées et les esters monoalkyliques d'acides gras époxydés, les polyesters d'acides polycarboxyliques aliphatiques et/ou aromatiques avec des alcools au moins divalents.

6. Composition de plastifiant selon l'une quelconque des revendications précédentes, la teneur en composés de formule générale (II) dans la composition de plastifiant représentant 10 à 99% en poids.

7. Composition de plastifiant selon l'une quelconque des revendications précédentes, le rapport pondéral entre les composés de formule générale (I) et les composés de formule générale (II) se situant dans la plage de 1:100 à 1:1.

8. Masse de moulage, contenant au moins un polymère et une composition de plastifiant telle que définie dans l'une quelconque des revendications 1 à 7.

9. Masse de moulage selon la revendication 8, le polymère étant un polymère thermoplastique choisi parmi
- les homopolymères ou les copolymères, qui contiennent au moins un monomère sous forme copolymérisée, qui est choisi parmi les C₂-C₁₀-mono-oléfines, le 1,3-butadiène, le 2-chloro-1,3-butadiène, l'alcool vinylique et ses esters d'alkyle en C₂-C₁₀, le chlorure de vinyle, le chlorure de vinylidène, le fluorure de vinylidène, le tétrafluoroéthylène, l'acrylate de glycidyle, le méthacrylate de glycidyle, les acrylates et les méthacrylates d'alcools en C₁-C₁₀, les aromatiques de vinyle, les (méth)acrylonitriles, l'anhydride de l'acide maléique et les acides monocarboxyliques et dicarboxyliques éthyléniquement α,β-insaturés,
- les homopolymères et copolymères de vinylacétals,
- les poly(esters de vinyle),
- les polycarbonates
- les polyesters,
- les polyéthers,
- les polyéthercétones,
- les polyuréthanes thermoplastiques,
- les polysulfures,
- les polysulfones,
- les polyéthersulfones,
- les esters alkyliques de cellulose
et leurs mélanges.

10. Masse de moulage selon la revendication 9, le polymère thermoplastique étant choisi parmi le poly(chlorure de vinyle) (PVC), le polyvinylbutyral (PVB), les homopolymères et les copolymères d'acétate de vinyle, les homopolymères et les copolymères de styrène, les polyacrylates, les polyuréthanes thermoplastiques (TPU) ou les polysulfures.

11. Masse de moulage selon l'une quelconque des revendications 9 ou 10, le polymère étant le poly(chlorure de vinyle) (PVC).

12. Masse de moulage selon la revendication 11, la teneur de la composition de plastifiant dans la masse de moulage représentant 1,0 à 300 pcc.

13. Masse de moulage selon l'une quelconque des revendications 9 ou 10, contenant au moins un polymère thermoplastique différent du poly(chlorure de vinyle), la teneur de la composition de plastifiant dans la masse de moulage représentant 0,5 à 300 pcc.

14. Masse de moulage selon la revendication 8, le polymère étant un élastomère, de préférence choisi parmi les caoutchoucs naturels, les caoutchoucs synthétiques et leurs mélanges.

15. Masse de moulage selon la revendication 14, la teneur de la composition de plastifiant dans la masse de moulage représentant 1,0 à 60 pcc.

16. Utilisation d'une composition de plastifiant telle que définie dans l'une quelconque des revendications 1 à 7 comme plastifiant pour des polymères thermoplastiques et des élastomères.

17. Utilisation d'une composition de plastifiant telle que définie dans l'une quelconque des revendications 1 à 7 comme plastifiant dans un plastisol.

18. Utilisation d'une masse de moulage telle que définie dans l'une quelconque des revendications 8 à 15, pour la fabrication de corps façonnés et de feuilles, tels que par exemple des boîtiers d'appareils électriques, des boîtiers d'ordinateur, des outils, des conduites tubulaires, des câbles, des tuyaux flexibles, des gaines de fil, des profilés de fenêtre, des composants pour la construction de véhicules, des pneus, des meubles, des mousses pour les rembourrages et les matelas, des bâches, des joints d'étanchéités, des feuilles composites, des plaques d'isolation, le cuir synthétique, des récipients d'emballage, des feuilles pour ruban adhésif ou des revêtements.

19. Utilisation d'une masse de moulage telle que définie dans l'une quelconque des revendications 8 à 15, pour la fabrication de corps façonnés et de feuilles qui entrent en contact direct avec les hommes ou les aliments.

20. Utilisation telle que définie dans la revendication 19, les corps façonnés et les feuilles qui entrent en contact direct avec les hommes ou les aliments étant des produits médicaux, des produits hygiéniques, des emballages alimentaires, des produits pour l'intérieur, des jouets et des articles de soin pour les enfants, des produits pour le sport et les loisirs, de l'habillement ou des fibres pour des tissus.
